# EUROPÄISCHE PATENTSCHRIFT

(11) **EP 3 350 551 B1**
(45) Veröffentlichungstag und Bekanntmachung des Hinweises auf die Patenterteilung: **19.06.2019**
(21) Anmeldenummer: 16787732.3
(22) Anmeldetag: 15.09.2016
(51) Int. Cl.: G01F 23/00, B60K 15/03

(54) **BETRIEBSFLÜSSIGKEITSBEHÄLTER FÜR EIN KRAFTFAHRZEUG**
OPERATING FLUID CONTAINER FOR A MOTOR VEHICLE
RÉSERVOIR À LIQUIDE DE SERVICE POUR UN VÉHICULE AUTOMOBILE

(30) Priorität: 15.09.2015 DE 102015217609
(43) Veröffentlichungstag der Anmeldung: 25.07.2018
(73) Patentinhaber: Kautex Textron GmbH & Co. KG, 53229 Bonn (DE)
(72) Erfinder: WOLF, Hartmut, 53639 Königswinter (DE); OSSEGE, Theodor, 53619 Rheinbreitbach (DE)
(74) Vertreter: Richly & Ritschel Patentanwälte PartG mbB
(86) Internationale Anmeldenummer: PCT/EP2016/071814
(87) Internationale Veröffentlichungsnummer: WO 2017/046240

(56) Entgegenhaltungen:
- EP-A2- 0 088 740
- WO-A1-2011/012937
- DE-A1-102010 048 841
- DE-A1-102013 207 425
- DE-C1- 19 834 671
- US-A- 5 072 615
- US-A1- 2006 032 547
- US-A1- 2015 027 571
- US-B1- 8 538 591

## Beschreibung

Die vorliegende Erfindung betrifft einen Betriebsflüssigkeitsbehälter für ein Kraftfahrzeug. Ferner betrifft die vorliegende ein Verfahren zum Befüllen eines Betriebsflüssigkeitsbehälters.

Bei aus dem Stand der Technik bekannten Betriebsflüssigkeitsbehältern, die beispielsweise als Kraftstoffbehälter oder als Harnstoffbehälter ausgebildet sind, wird ein Befüllvorgang entweder manuell durch einen Betanker oder durch eine Befüllvorrichtung, beispielsweise ein Zapfventil einer Zapfsäule, automatisch beendet, wenn ein maximaler Füllgrad des Betriebsflüssigkeitsbehälters erreicht ist und ein Ventilsitz eines Betankungsentlüftungsventils durch dessen Ventilkörper aufgrund seines Auftriebs in der Betriebsflüssigkeit verschlossen wird, so dass keine weitere Entlüftung während der Betankung ermöglicht ist. Als Folge steigt bei weiterer Einleitung von Betriebsflüssigkeit in ein Einfüllrohr des Betriebsflüssigkeitsbehälters der Druck im Betriebsflüssigkeitsbehälter an, woraufhin ein Betriebsflüssigkeitspegel im Einfüllrohr bis hin zu Erreichen einer Abschaltöffnung im die Betriebsflüssigkeit ausgebenden Zapfventil erreicht wird, woraufhin der Befüllvorgang durch das Zapfventil beendet wird.

Diese Situation hat zur Folge, dass ein vom Betanker abgeschätztes Betankungsvolumen in den Betriebsflüssigkeitsbehälter eingefüllt wird, die der Betanker zum Erreichen eines Ziels als ausreichend erachtet, oder dass der Betriebsflüssigkeitsbehälter bis hin zum maximalen Füllgrad gefüllt wird.

Ein weiteres Problem von aus dem Stand der Technik bekannten Betriebsflüssigkeitsbehältern ist deren Anfälligkeit für eine Schräglagenvariation. Denn aufgrund eines rein mechanisch eingeleiteten Befüllstopps (Verschließen eines Ventilsitzes durch einen Ventilkörper) wird bei unterschiedlichen Schräglagen des Betriebsflüssigkeitsbehälters entweder ein zu früher Befüllstopp oder ein zu später Befüllstopp eingeleitet, so dass der Betriebsflüssigkeitsbehälter nach Beenden des Befüllvorganges mit zu wenig oder mit zu viel Betriebsflüssigkeit gefüllt sein kann.

Ein weiteres Problem bei aus dem Stand der Technik bekannten Betriebsflüssigkeitsbehältern besteht in marktspezifischen Betankungsverhalten der Betanker. So ist es in einigen Ländern wie beispielsweise den Vereinigten Staaten von Amerika erwünscht, den Betriebsflüssigkeitsbehälter bis hin zu einem glatten Währungsbetrag zu füllen, so dass bei der Bezahlung möglichst wenig Wechselgeld zurückzuzahlen ist. In anderen Ländern wie der Bundesrepublik Deutschland ist es hingegen oft gewünscht, dass nach automatischer Abschaltung durch Erreichen des maximalen Befüllgrades noch bis zu dreimal nachgetankt werden kann, so dass der Betanker den Eindruck erhält, dass der Betriebsflüssigkeitsbehälter maximal befüllt ist. In anderen Ländern wie beispielsweise Japan ist es erwünscht, dass nach Beendigung des Befüllvorganges die Betriebsflüssigkeit im Einfüllrohr steht, so dass der Betanker die Betriebsflüssigkeitssäule im Einfüllrohr bzw. im Einfüllstutzen sehen kann und den Eindruck hat, dass die absolute Maximalmenge in den Betriebsflüssigkeitsbehälter eingefüllt ist.

Diese marktspezifischen Abschaltverhalten haben zur Folge, dass Hersteller von Betriebsflüssigkeitsbehältern für unterschiedliche Märkte unterschiedliche Betriebsflüssigkeitsbehälter bereitstellen müssen, was zu erhöhten Produktions- und Lagerkosten führt.

Die DE 198 34 671 C1 beschreibt ein Verfahren und eine Vorrichtung zum Betanken eines Kraftfahrzeugs. Die Vorrichtung umfasst dabei einen Tank, in dem ein Füllstandsensor angeordnet ist. Der Füllstandsensor ist über eine Datenleitung mit einem Tanksteuergerät datengekoppelt. Das Tanksteuergerät ist ferner über eine Leuchtdiode und einer in einem Zapfventil bereitgestellten Leuchtdiode mit einer Steuereinrichtung einer Zapfsäule datengekoppelt, wobei das Zapfventil über einen Einfüllschlauch mit der Zapfsäule fluidverbunden ist. Bei Erreichen eines vorgegebenen Füllstands im Tank initiiert die Steuereinrichtung der Zapfsäule einen Befüllstopp des Tanks. Aufgrund der Datenaustauschverbindung zwischen dem Tanksteuergerät und der Steuereinrichtung der Zapfsäule können sich der Füllstandsensor des Tanks und die entsprechenden Einfüllsensoren der Zapfsäule gegenseitig kalibrieren.

Eine der vorliegenden Erfindung zugrunde liegende Aufgabe ist folglich die Bereitstellung eines Betriebsflüssigkeitsbehälters, mittels dem ein Beenden eines Befüllvorganges seitens des Betriebsflüssigkeitsbehälters einleitbar bzw. initiierbar ist. Ferner ist eine der vorliegenden Erfindung zugrunde liegende Aufgabe die Bereitstellung eines Betriebsflüssigkeitsbehälters, der nach Beenden eines Befüllvorganges unabhängig von einer eventuellen Schräglage mit der nominalen Füllmenge gefüllt ist. Ferner ist eine der vorliegenden Erfindung zugrunde liegende Aufgabe die Bereitstellung eines Betriebsflüssigkeitsbehälters, mittels dem unterschiedliche Abschaltcharakteristiken realisierbar sind. Ein weiteres der vorliegenden Erfindung ist die Bereitstellung eines Verfahrens zum Betanken eines Betriebsflüssigkeitsbehälters, das den unterschiedlichen Tankgewohnheiten in unterschiedlichen Absatzmärkten Rechnung trägt.

Diese Aufgaben werden durch einen Betriebsflüssigkeitsbehälter mit den Merkmalen des Anspruchs 1 gelöst. Vorteilhafte Ausgestaltungen sind in den abhängigen Ansprüchen beschrieben.

Im Genaueren wird die der vorliegenden Erfindung zugrunde liegende Aufgabe durch einen Betriebsflüssigkeitsbehälter für ein Kraftfahrzeug gelöst, der einen Füllstandsensor, eine Tanksteuereinrichtung und zumindest einen elektrisch und/oder elektromagnetisch betätigbaren Aktuator umfasst, wobei mittels des Aktuators ein Beenden eines Befüllvorganges des Betriebsflüssigkeitsbehälters initiierbar ist. Dabei ist die Tanksteuereinrichtung mittels einer ersten Datenaustauschverbindung mit dem Aktuator und mittels einer zweiten Datenaustauschverbindung mit dem Füllstandsensor verbunden. Der Füllstandsensor ist dazu ausgebildet, Daten, die einen Füllstand des Betriebsflüssigkeitsbehälters repräsentieren, über die zweite Datenaustauschverbindung an die Tanksteuereinrichtung zu übertragen. Die Tanksteuereinrichtung wiederum ist dazu ausgebildet, bei Empfang von Daten, die einem vorbestimmten Füllstand des Betriebsflüssigkeitsbehälters repräsentieren, über die erste Datenaustauschverbindung ein Befüllstoppsignal an den Aktuator zu übertragen, wobei bei Empfang des Befüllstoppsignals der Aktuator ein Beenden eines Befüllvorganges des Betriebsflüssigkeitsbehälters initiiert.

Der erfindungsgemäße Betriebsflüssigkeitsbehälter bietet den Vorteil, dass das Beenden eines Befüllvorganges von der Tanksteuerungseinrichtung initiierbar ist, bevor beispielsweise ein maximaler Füllgrad des Betriebsflüssigkeitsbehälters erreicht ist. So kann beispielsweise durch die Tanksteuereinrichtung oder durch eine andere Elektronikeinheit (z.B. ein Bordcomputer oder ein Smartphone) eine einzufüllende Menge von Betriebsflüssigkeit unter Berücksichtigung von beispielsweise Navigationsdaten und eines Durchschnittsverbrauchs des Kraftfahrzeugs ermittelt werden, wobei bei Erreichen der einzufüllenden Menge, die über den Füllstand Sensor ermittelt wird, das Befüllstoppsignal an einen der Aktuatoren ausgegeben wird, wodurch das Beenden des Befüllvorganges initiiert wird.

Durch Bereitstellen eines elektrisch und/oder elektromagnetisch betätigbaren Aktuators zum Beenden eines Befüllvorganges des Betriebsflüssigkeitsbehälters wird ferner erreicht, dass der Befüllvorgang nicht mechanisch beendet werden muss. Durch das Initiieren des Beendens eines Befüllvorganges mittels eines elektrisch und/oder elektromagnetisch betätigbaren Aktuators kann eine Schräglagenkompensation durchgeführt werden, bei der eine Schräglage des Betriebsflüssigkeitsbehälters beim Befüllen berücksichtigt und kompensiert wird. Denn das Beenden des Befüllvorganges wird nicht durch ein Aufschwimmen eines Ventilkörpers in einem Ventil realisiert, sondern wird mittels eines elektrischen Signals, das von der Tanksteuereinrichtung ausgegeben wird, initiiert.

Darüber hinaus ist es möglich, durch eine entsprechende Anpassung der Tanksteuereinrichtung das Befüllstoppsignal zu einem Zeitpunkt auszugeben, bevor der maximale Befüllgrad des Betriebsflüssigkeitsbehälters erreicht ist, so dass anschließend ein marktspezifisches Abschalten unter Berücksichtigung unterschiedliche Abschaltcharakteristiken durchgeführt werden kann.

So ist es beispielsweise möglich, kurz vor Erreichen des maximalen Befüllgrades den Betankungsvorgang zu beenden, woraufhin eine Befüllvorrichtung (z.B. eine Zapfsäule) den Befüllvorgang solange fortführt, bis eine Befüllmenge in den Betriebsflüssigkeitsbehälter eingefüllt ist, die einem glatten Währungsbetrag entspricht. Darüber hinaus ist es auch möglich, nach Initiieren des Beendens des Befüllvorganges das Befüllen seitens einer Befüllvorrichtung (Zapfsäule) mit einer verminderten Fördergeschwindigkeit fortzuführen, so dass in einem Einfüllrohr des Betriebsflüssigkeitsbehälters die Betriebsflüssigkeit langsam ansteigt und nach Erreichen einer Abschaltbohrung (einer Zapfpistole der Befüllvorrichtung) die Betriebsflüssigkeit für eine vorbestimmte Zeit im Einfüllrohr stehen bleibt, so dass diese vom Betanker visuell wahrnehmbar ist. Eine entsprechende Abschaltcharakteristik ist insbesondere für den japanischen Markt relevant. Darüber hinaus ist es aber auch möglich, den Befüllvorgang durch die Tanksteuereinrichtung zu einem Zeitpunkt zu beenden, der ein dreifaches Nachtanken durch den Betanker ermöglicht. Dies ist insbesondere für den europäischen, dort insbesondere für den deutschen Markt von Relevanz.

Der Betriebsflüssigkeitsbehälter kann als Kraftstoffbehälter für beispielsweise Ottokraftstoff oder Dieselkraftstoff ausgebildet sein. Jedoch kann der Betriebsflüssigkeitsbehälter auch als Harnstoffbehälter(SCR-Behälter) oder Wasserbehälter ausgebildet sein.

Zu dem Betriebsflüssigkeitsbehälter gehört der Behälter an sich, ein Einfüllrohr, über den Betriebsflüssigkeit in den Behälter einzuführen ist, ein Einfüllstutzen, der im Einfüllrohr befestigt ist und mit diesem in Fluidkommunikation steht, Entlüftungsleitungen des Behälters, insbesondere die Entlüftungsleitung hin zu einem Aktivkohlefilter.

Die Tanksteuereinrichtung ist als elektronische Datenverarbeitungseinrichtung ausgebildet, die eine Signalausgangsleitung und vorzugsweise auch eine Signaleingangsleitung umfasst. Die erste Datenaustauschverbindung wird mittels der Signalausgangsleitung realisiert, und die zweite Datenaustauschverbindung wird durch die Signaleingangsleitung realisiert.

Unter einem elektrisch bzw. elektromagnetisch betätigbaren Aktuator ist im Sinne der vorliegenden Erfindung auch ein elektromechanisch betätigbarer Aktuator zu verstehen.

Vorzugsweise ist über die erste Datenaustauschverbindung auch eine bidirektionale Datenübertragung möglich. Weiter vorzugsweise ist auch über die zweite Datenaustauschverbindung eine bidirektionale Datenübertragung ermöglicht.

Der Füllstandsensor ist innerhalb des Betriebsflüssigkeitsbehälters angeordnet und dazu ausgebildet, dessen Füllstand zu bestimmen. Insbesondere ist der Füllstandsensor dazu ausgebildet, bei Erreichen eines vorgegebenen Füllstands ein Stoppsignal an die Tanksteuereinrichtung zu übertragen. Die Tanksteuereinrichtung wiederum ist dann dazu ausgebildet, bei Empfang des von dem Füllstandsensor ausgegeben Stoppsignals ein Befüllstoppsignal an zumindest einen der Aktuatoren zu senden.

Vorzugsweise ist die Tanksteuereinrichtung mittels einer dritten Datenaustauschverbindung mit einer Befüllvorrichtung verbunden, wobei die Tanksteuereinrichtung dazu ausgebildet ist, bei Empfang von Daten, die dem vorbestimmten Füllstand des Betriebsflüssigkeitsbehälters repräsentieren, über die dritte Datenaustauschverbindung das Befüllstoppsignal an die Befüllvorrichtung zu übertragen.

Ein entsprechend ausgebildeter Betriebsflüssigkeitsbehälter bietet den Vorteil, dass der Befüllstopp noch zielgenauer realisiert werden kann, da zum Beenden des Befüllvorganges innerhalb des Betriebsflüssigkeitsbehälters kein Druck aufgebaut werden muss. Daher ist es mit dem entsprechend ausgebildeten Betriebsflüssigkeitsbehälter nochmals verbessert möglich, trotz Schräglage des Betriebsflüssigkeitsbehälters die nominal einzufüllende Betriebsflüssigkeitsmenge in den Betriebsflüssigkeitsbehälter einzufüllen. Weiterhin ist es mit dem entsprechend ausgebildeten Betriebsflüssigkeitsbehälter nochmals verbessert möglich, bei Erreichen eines vorgegebenen Befüllstandes, der unterhalb des maximalen Befüllstandes des Betriebsflüssigkeitsbehälters liegt, den Befüllvorgang zu beenden, so dass die oben dargestellten unterschiedlichen Abschaltcharakteristiken für unterschiedliche Märkte seitens der Tanksteuereinrichtung realisiert werden können.

Bei der Befüllvorrichtung kann es sich beispielsweise um eine Zapfsäule mit einem Zapfventil handeln, wobei der Befüllstopp entweder in der Zapfsäule und oder in dem Zapfventil realisiert wird.

Die dritte Datenaustauschverbindung ist vorzugsweise als drahtlose Datenaustauschverbindung ausgebildet, die beispielsweise über Nahfeldkommunikation (NFC, englisch: near field communication), Bluetooth, GSM (Global System for Mobile Communication) oder über eine andere drahtlose Datenverbindung realisiert sein kann.

Vorzugsweise ist die Tanksteuereinrichtung dazu ausgebildet, zusätzlich zu den von dem Füllstandsensor übertragenen Daten weitere eine Neigung des Betriebsflüssigkeitsbehälters repräsentierende Daten zu empfangen, wobei die Tanksteuereinrichtung unter Verwendung der den Füllstand repräsentierenden Daten und der die Neigung des Betriebsflüssigkeitsbehälters repräsentierende Daten einen Ist-Füllstand des Betriebsflüssigkeitsbehälters ermittelt.

Durch eine entsprechende Ausbildung des Betriebsflüssigkeitsbehälters wird eine nochmals genauere Beendigung des Befüllvorganges erreicht, da Schräglagen des Betriebsflüssigkeitsbehälters bei der Bestimmung des Befüllgrades berücksichtigt werden. Die die Neigung des Betriebsflüssigkeitsbehälters repräsentierende Daten können beispielsweise von einem Neigungssensor des Kraftfahrzeugs zur Verfügung gestellt werden.

Der Ist-Füllstand entspricht dem Füllstand des Betriebsflüssigkeitsbehälters (den nominalen Füllstand des Betriebsflüssigkeitsbehälters), wenn der Betriebsflüssigkeitsbehälters keine Neigung aufweist, d.h. wenn das Kraftfahrzeug auf einer horizontalen Ebene ohne Neigung positioniert ist.

Der Zusammenhang zwischen dem Füllstandsensorsignal, den die Neigung des Betriebsflüssigkeitsbehälters repräsentierende Daten und dem tatsächlichen Füllgrad des Betriebsflüssigkeitsbehälters ist vorzugsweise in einem Korrekturkennfeld gespeichert, das vorzugsweise in der Tanksteuereinrichtung abgespeichert ist. Zum Erzeugen des Korrekturkennfeldes kann der Betriebsflüssigkeitsbehälter beispielsweise um eine Horizontalachse in 5° Schritten geneigt und der Betriebsflüssigkeitsbehälter in jeder Schräglage um die Vertikalachse und 360° in 5° Schritten rotiert werden. Dabei wird in jedem dieser Schräglagen- und Rotationspunkten eine Höhen-Volumen-Kennlinie erzeugt und in das Korrekturkennfeld eingetragen. Das Korrekturkennfeld dient dann zur Bestimmung der exakten im Betriebsflüssigkeitsbehälter befindlichen Betriebsflüssigkeitsmenge.

Vorzugsweise umfasst der Betriebsflüssigkeitsbehälter einen Neigungssensor, mittels dem die Neigung des Betriebsflüssigkeitsbehälters bestimmbar ist. Dabei ist der Neigungssensor mit der Tanksteuereinrichtung über die zweite Datenaustauschverbindung und/oder über eine weitere Datenaustauschverbindung, die über eine weitere Signalleitung realisiert sein kann, verbunden, über die von dem Neigungssensor ermittelte und die Neigung des Betriebsflüssigkeitsbehälters repräsentierende Daten an die Tanksteuereinrichtung übertragbar sind.

Der Betriebsflüssigkeitsbehälter ist vorzugsweise derart ausgebildet, dass der zumindest eine Aktuator als Betriebs- und/oder Betankungsentlüftungsventil ausgebildet ist, das im Betriebsflüssigkeitsbehälter angeordnet ist. Dabei ist das Betriebs- und/oder Betankungsentlüftungsventil elektrisch und/oder elektromagnetisch zwischen einer Offenstellung und einer Schließstellung betätigbar/verstellbar, wobei in der Offenstellung des Betriebs- und/oder Betankungsentlüftungsventils der Betriebsflüssigkeitsbehälter mittels des Betriebs- und/oder Betankungsentlüftungsventils mit einer Entlüftungsleitung fluidverbunden ist, und wobei in der Schließstellung des Betriebs- und/oder Betankungsentlüftungsventils der Betriebsflüssigkeitsbehälter von der Entlüftungsleitung mittels des Betriebs- und/oder Betankungsentlüftungsventils fluidgetrennt ist.

Die Verwendung des Betriebs- und/oder Betankungsentlüftungsventils zum Beenden eines Befüllvorganges bietet den Vorteil, dass sowieso für den Betrieb des Betriebsflüssigkeitsbehälters notwendige Ventileinrichtungen verwendet werden, um den Befüllvorgang elektrisch und/oder elektromagnetisch zu beenden, so dass nicht weitere Bauteile im Betriebsflüssigkeitsbehälter einzubauen sind, wodurch die Komplexität des entsprechend ausgebildeten Betriebsflüssigkeitsbehälters nicht erhöht wird.

Der Betriebsflüssigkeitsbehälter ist vorzugsweise derart ausgebildet, dass der zumindest eine Aktuator als Rückschlagventil ausgebildet ist, das in einem in den Betriebsflüssigkeitsbehälter mündenden Einfüllrohr angeordnet ist. Dabei ist das Rückschlagventil elektrisch und/oder elektromagnetisch zwischen einer Offenstellung und einer Schließstellung betätigbar/verstellbar, wobei in der Offenstellung des Rückschlagventils der Betriebsflüssigkeitsbehälter mit dem Einfüllrohr fluidverbunden ist, und wobei in der Schließstellung des Rückschlagventils der Betriebsflüssigkeitsbehälter von dem Einfüllrohr mittels des Rückschlagventils fluidgetrennt ist oder die lichte Weite des Einfüllrohrs mittels des Rückschlagventils reduziert ist.

Weiter vorzugsweise ist der Betriebsflüssigkeitsbehälter derart ausgebildet, dass der zumindest eine Aktuator als Störkörper ausgebildet ist, der in einem in den Betriebsflüssigkeitsbehälter mündenden Einfüllrohr angeordnet ist, wobei der Störkörper elektrisch und/oder elektromagnetisch zwischen einer Offenstellung und einer Störstellung betätigbar ist, wobei in der Störstellung des Störkörpers eine lichte Weite des Einfüllrohrs nicht reduziert ist, und wobei in der Störstellung des Störkörpers dieser in das Einfüllrohr hineinragt und die lichte Weite des Einfüllrohrs reduziert.

Weiter vorzugsweise ist der Betriebsflüssigkeitsbehälter derart ausgebildet, dass der zumindest eine Aktuator als Elektromagnet ausgebildet ist, der in einem Einfüllstutzen eines in den Betriebsflüssigkeitsbehälter mündenden Einfüllrohrs angeordnet ist, wobei der Elektromagnet zwischen einem Aktivzustand und einem Passivzustand betätigbar/verstellbar ist. Im Aktivzustand erzeugt der Elektromagnet ein Magnetfeld, und im Passivzustand erzeugt der Elektromagnet kein Magnetfeld.

Die drei zuletzt beschriebenen Ausführungen des Betriebsflüssigkeitsbehälters bieten den Vorteil, dass zum Beenden des Befüllvorganges kein Innendruck im Betriebsflüssigkeitsbehälter aufgebaut werden muss, so dass nach Beenden des Befüllvorganges der Betriebsflüssigkeitsbehälter im Wesentlichen drucklos ist. Da kein Innendruck aufgebaut wird, dehnt sich der Betriebsflüssigkeitsbehälter auch nicht aus, so dass die Genauigkeit der Füllmengenbestimmung im Betriebsflüssigkeitsbehälter erhöht ist. Ferner bietet die Tatsache, dass zum Beenden des Befüllvorganges kein Druck im Betriebsflüssigkeitsbehälter aufgebaut werden muss, den Vorteil, dass die in den Betriebsflüssigkeitsbehälter eingefüllte Betriebsflüssigkeitsmenge präziser der in den Betriebsflüssigkeitsbehälter einzufüllenden Betriebsflüssigkeitsmenge entspricht. Denn das in dem Betriebsflüssigkeitsbehälter verbleibende Gasvolumen fungiert nicht als kompressierbare Gasfeder. Die Menge der in das Einfüllrohr eingefüllten Betriebsflüssigkeit ist sehr genau bestimmbar, so dass die Genauigkeit der eingefüllten Betriebsflüssigkeitsmenge erhöht ist.

In einer weiteren bevorzugten Ausführungsform ist der Betriebsflüssigkeitsbehälter derart ausgebildet, dass der zumindest eine Aktuator als Absperrventil ausgebildet ist, das zwischen dem Betriebsflüssigkeitsbehälter und einem Aktivkohlefilter angeordnet ist. Das Absperrventil ist elektrisch und/oder elektromagnetisch zwischen einer Offenstellung und einer Schließstellung betätigbar/verstellbar, wobei in der Offenstellung des Absperrventils der Betriebsflüssigkeitsbehälter mittels des Absperrventils mit dem Aktivkohlefilter fluidverbunden ist, und wobei in der Schließstellung des Absperrventils der Betriebsflüssigkeitsbehälter von dem Aktivkohlefilter mittels des Absperrventils fluidgetrennt ist.

In einer weiteren bevorzugten Ausführungsform ist der Betriebsflüssigkeitsbehälter derart ausgebildet, dass der zumindest eine Aktuator als Absperrventil ausgebildet ist, das zwischen einem Aktivkohlefilter und der Atmosphäre angeordnet ist. Das Absperrventil ist elektrisch und/oder elektromagnetisch zwischen einer Offenstellung und einer Schließstellung betätigbar/verstellbar, wobei in der Offenstellung des Absperrventils der Betriebsflüssigkeitsbehälter über den Aktivkohlefilter und über das Absperrventil mit der Atmosphäre fluidverbunden ist, und wobei in der Schließstellung des Absperrventils der Betriebsflüssigkeitsbehälter und das Aktivkohlefilter mittels des Absperrventils von der Atmosphäre fluidgetrennt sind.

Der Betriebsflüssigkeitsbehälter ist vorzugsweise derart ausgebildet, dass die Tanksteuereinrichtung einen Sollfüllstand-Signaleingangsleitung aufweist, über die einen Sollfüllstand repräsentierende Daten an die Tanksteuereinrichtung übertragbar sind, wobei die Tanksteuereinrichtung dazu ausgebildet ist, das Befüllstoppsignal derart auszugeben, dass nach Beenden des Befüllvorganges der Füllstand des Betriebsflüssigkeitsbehälters dem Sollfüllstand entspricht.

Ein entsprechend ausgebildeter Betriebsflüssigkeitsbehälter bietet den Vorteil, dass ein einziger Betriebsflüssigkeitsbehälter für unterschiedliche Märkte (z.B. USA, Europa, Japan) verwendet werden kann, bei denen unterschiedliche Abschaltcharakteristiken bevorzugt sind. Denn durch Übertragen von den Sollfüllstand repräsentierenden Daten über die Sollfüllstand-Signaleingangsleitung können anschließend unterschiedliche von dem Betanker durchzuführende Nachtankungen durchgeführt werden. Beispielsweise kann bei einem ersten Sollfüllstand noch bis zu dreimal nachgetankt werden. Bei einem zweiten Sollfüllstand kann an eine Befüllvorrichtung ein Signal übertragen werden, das bewirkt, dass die Befüllvorrichtung die Befüllung des Betriebsflüssigkeitsbehälters mit einer verminderten Befüllrate fortführt, so dass die Betriebsflüssigkeit im Einfüllrohr ansteigt und auch nach Beendigung des Befüllvorganges für eine vorgegebene Zeit in diesen verbleibt, so dass der Betanker die Betriebsflüssigkeit im Einfüllrohr sehen kann (japanisches Abschaltverhalten).

Weiter vorzugsweise ist der Betriebsflüssigkeitsbehälter derart ausgebildet, dass die Tanksteuereinrichtung eine Preissignaleingangsleitung aufweist, über die Preisinformationsdaten von in den Betriebsflüssigkeitsbehälter einzufüllender Betriebsflüssigkeit übertragbar sind. Dabei ist die Tanksteuereinrichtung derart ausgebildet, dass diese unter Berücksichtigung der Preisinformationsdaten und des Sollfüllstandes das Befüllstoppsignal derart ausgibt, dass nach Beenden des Befüllvorganges ein Preis der in den Betriebsflüssigkeitsbehälters eingefüllten Betriebsflüssigkeit einem glatten Währungsbetrag entspricht.

Die der vorliegenden Erfindung zugrundeliegende Aufgabe wird ferner durch ein Verfahren zum Befüllen eines Betriebsflüssigkeitsbehälters mittels einer Befüllvorrichtung gelöst, wobei der Betriebsflüssigkeitsbehälter die Merkmale eines der oben beschriebenen Betriebsflüssigkeitsbehälter aufweist, und wobei das Verfahren folgende Verfahrensschritte aufweist:
- Übertragen eines Entlüftungssignals an zumindest das Betriebs- und/oder Betankungsentlüftungsventil mittels der Tanksteuereinrichtung;
- Ermitteln des Füllstandes des Betriebsflüssigkeitsbehälters mittels des Füllstandsensors; und
- Ausgeben eines Befüllstoppsignals an zumindest einen Aktuator wenn der Füllstand des Betriebsflüssigkeitsbehälters einen Sollfüllstand erreicht hat, wobei der Sollfüllstand niedriger ist als ein Maximalbefüllstand des Betriebsflüssigkeitsbehälters.

Das erfindungsgemäße Verfahren bietet den Vorteil, dass ein Beenden des Befüllvorgangs vor Erreichen des Maximalbefüllstands des Betriebsflüssigkeitsbehälter automatisiert initiiert wird, so dass nach dem Beenden des Befüllvorgangs entweder vom Betanker (manuell) oder seitens der Befüllvorrichtung unterschiedliche Nachtankverfahren, die marktspezifisch zueinander unterschiedlich sind, durchgeführt werden können.

Vorzugsweise weist das Verfahren ferner folgende Verfahrensschritte auf:
- Etablieren einer Datenaustauschverbindung zwischen der Tanksteuereinrichtung und der Befüllvorrichtung;
- Übertragen eines Befüllstartsignals von der Tanksteuereinrichtung an die Befüllvorrichtung über die Datenaustauschverbindung, wenn das Entlüftungssignal an das Betriebs- und/oder Betankungsentlüftungsventil übertragen wird, woraufhin die Befüllvorrichtung mit der Förderung von Betriebsflüssigkeit in den Betriebsflüssigkeitsbehälter startet; und
- Übertragen eines zweiten Befüllstoppsignals von der Tanksteuereinrichtung an die Befüllvorrichtung über die Datenaustauschverbindung, wenn das Befüllstoppsignal an zumindest einen der Aktuatoren übertragen wird, woraufhin die Befüllvorrichtung die Förderung der Betriebsflüssigkeit beendet.

Weiter vorzugsweise wird bei dem Verfahren ein weiteres Befüllstartsignal von der Tanksteuereinrichtung an die Befüllvorrichtung übertragen, nachdem das zweite Befüllstoppsignal von der Tanksteuereinrichtung an die Befüllvorrichtung übertragen wurde, so dass eine weitere Befüllung des Betriebsflüssigkeitsbehälters durch die Befüllvorrichtung erfolgt, bis ein automatisches Abschalten des Befüllvorganges durch die Befüllvorrichtung durchgeführt wird.

Das automatische Abschalten durch die Befüllvorrichtung erfolgt üblicherweise dadurch, dass die Betriebsflüssigkeit in dem Einfüllrohr des Betriebsflüssigkeitsbehälters ansteigt, bis eine Abschaltöffnung eines Zapfventils der Befüllvorrichtung erreicht wird. Das weitere Befüllstartsignal, das von der Tanksteuerungseinrichtung an die Befüllvorrichtung übertragen wird, wird vorzugsweise dreimal aufeinanderfolgend übertragen, so dass seitens der Befüllvorrichtung drei Nachtankungen durchgeführt werden. Vorzugsweise erfolgt das Nachtanken seitens der Befüllvorrichtung mit einer verminderten Befüllrate, beispielsweise mit 5 Litern pro Minute. Eine entsprechende automatische Nachtankung sichert einen gänzlich gefüllten Betriebsflüssigkeitsbehälter und ist insbesondere für den europäischen Markt von Bedeutung.

Vorzugsweise ist das Verfahren derart ausgebildet, dass das Befüllstoppsignal an das Betriebs- und/oder Entlüftungsventil ausgegeben wird, wenn der Füllstand des Betriebsflüssigkeitsbehälters den Sollfüllstand erreicht hat und ein Währungsbetrag der von der Befüllvorrichtung geförderten Betriebsflüssigkeitsmenge einem glatten Währungsbetrag entspricht.

Das entsprechende Verfahren bietet den Vorteil, dass nach Beenden des Befüllvorgangs von dem Betanker ein glatter Währungsbetrag zu entrichten ist. Das entsprechende Abschaltverfahren ist insbesondere für den US-amerikanischen Markt von Bedeutung.

Weiter vorzugsweise ist das Verfahren derart ausgebildet, dass dieses folgende Verfahrensschritte aufweist:
- Etablieren einer Datenaustauschverbindung zwischen der Tanksteuereinrichtung und der Befüllvorrichtung;
- Übertragen eines Befüllstartsignals von der Tanksteuereinrichtung an die Befüllvorrichtung über die Datenaustauschverbindung, wenn das Entlüftungssignal an das Betriebs- und/oder Betankungsentlüftungsventil übertragen wird, woraufhin die Befüllvorrichtung mit der Förderung von Betriebsflüssigkeit in den Betriebsflüssigkeitsbehälter startet; und
- Übertragen mittels der Tanksteuereinrichtung eines Belüftungsstoppsignals an das Betriebs- und/oder Betankungsentlüftungsventil, so dass eine Entlüftung des Betriebsflüssigkeitsbehälters gestoppt wird, und gleichzeitiges Übertragen eines Signals von der Tanksteuereinrichtung an die Befüllvorrichtung, mittels dem eine Reduzierung einer Förderrate der Befüllvorrichtung initiiert wird.

Das entsprechend ausgebildete Verfahren bewirkt ein Befüllen des Betriebsflüssigkeitsbehälters derart, dass zum Ende des Befüllvorgangs die Entlüftung des Betriebsflüssigkeitsbehälters gestoppt wird und gleichzeitig die Befüllgeschwindigkeit seitens der Befüllvorrichtung reduziert wird, so dass der Befüllvorgang beendet wird, wenn die Betriebsflüssigkeit im Einfüllrohr des Betriebsflüssigkeitsbehälters ansteigt und seitens der Befüllvorrichtung ein automatisches Abschalten durchgeführt wird (Schnüffelbohrung). Dabei verbleibt die Betriebsflüssigkeit für den Betanker im Einfüllrohr / Einfüllkopf des Betriebsflüssigkeitsbehälters sichtbar. Vorzugsweise kann final noch ein Entlüftungssignal gefolgt von einem Entlüftungsstoppsignal an das Betriebs- und/oder Betankungsentlüftungsventil von der Tanksteuereinrichtung ausgegeben Werden, wodurch die Flüssigkeitssäule aus dem Einfüllrohr in den Behälter abfließt. Das entsprechende Abschaltverfahren ist insbesondere für den japanischen Markt von Bedeutung.

Unter einem glatten Währungsbetrag ist ein Währungsbetrag zu verstehen, der keine Nachkommastellen aufweist (zum Beispiel 37 € oder 42 $ usw.).

Unter einer elektrischen und/oder elektromagnetischen Verstellbarkeit eines Aktuators ist eine elektromechanische Verstellung des Aktuators zu verstehen.

Die Tanksteuerungseinrichtung kann als separate elektronische Einrichtung ausgebildet sein. Jedoch kann die Tanksteuerungseinrichtung auch als Teil eines Bordcomputersystems des Kraftfahrzeugs ausgebildet sein und eine Untereinheit des Bordcomputersystems darstellen.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines erfindungsgemäßen Betriebsflüssigkeitsbehälters; und
- Figur 2:: eine schematische Schnittdarstellung eines Einfüllrohrs samt Einfüllstutzen eines erfindungsgemäßen Kraftfahrzeugtanks.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

In der nachfolgenden Beschreibung wird die vorliegende Erfindung anhand eines als Kraftfahrzeugtank 10 ausgebildeten Betriebsflüssigkeitsbehälters 10 erläutert. Jedoch kann der Betriebsflüssigkeitsbehälter 10 beispielsweise auch als Harnstoffbehälter, Wasserbehälter oder allgemein als eine Betriebsflüssigkeit aufnehmender Behälter ausgebildet sein.

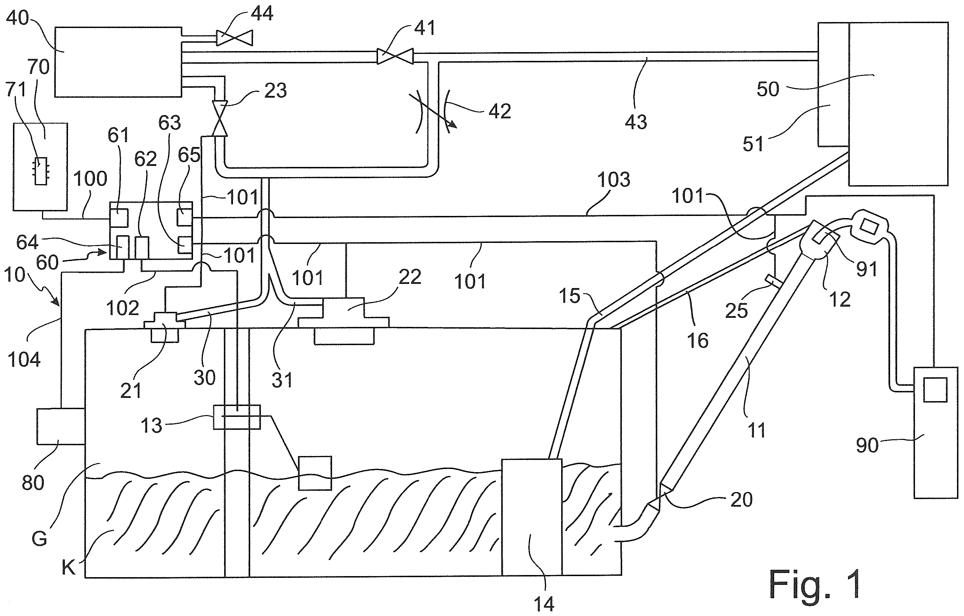

Figur 1 zeigt eine schematische Darstellung eines Kraftfahrzeugtanks 10. Der Kraftfahrzeugtank 10 beherbergt eine gewisse Menge von Kraftstoff K und darüber hinaus ein Gasvolumen G, das üblicherweise mit Kohlenwasserstoffen gesättigt ist. Zum Einfüllen von Kraftstoff K weist der Kraftfahrzeugtank 10 ein Einfüllrohr 11 auf, an dessen vom Kraftstofftank 10 abgewandten Ende ein Einfüllstutzen 12 angeordnet ist, der zur Aufnahme eines Zapfventils 91 einer Befüllvorrichtung 90 ausgelegt ist. Weiterhin beherbergt der Kraftfahrzeugtank 10 eine als Kraftstofffördereinrichtung 14 ausgebildete Betriebsflüssigkeitsfördereinrichtung 14, die im dargestellten Ausführungsbeispiel auch als Kraftstoffpumpe 14 bezeichnet werden kann. Die Kraftstoffpumpe 14 ist über eine Kraftstoffleitung 15 mit einem Motor 50 eines in der Figur nicht dargestellten Kraftfahrzeugs zum Fördern des Kraftstoff K hin zum Motor 50 fluidverbunden. Ferner kann der Kraftfahrzeugtank 10 eine Rezirkulationsleitung 16 umfassen, die mit dem Kraftfahrzeugtank 10 und einem vom Einfüllstutzen 12 umschlossenen Volumen fluidverbunden ist. Die Rezirkulationsleitung 16 dient einen Gasaustausch zwischen dem Kraftfahrzeugtank 10 und dem Einfüllstutzen 12 während eines Betankungsvorgangs des Kraftfahrzeugtanks 10 und ist lediglich optional und üblicherweise für den US-amerikanischen Markt vorgesehen.

Der Kraftfahrzeugtank 10 umfasst ferner einen Füllstandsensor 13, eine Tanksteuereinrichtung 60 und zumindest einen elektrisch und/oder elektromechanisch betätigbaren Aktuator 20, 21, 22, 23, 24, 25, 44 mittels dem/den ein Beenden eines Befüllvorgangs des Kraftfahrzeugtanks 10 initiiertbar ist. Die Art und Weise der Initiierung eines Beendens eines Befüllvorgangs des Kraftfahrzeugtanks wird weiter unten beschrieben. Die Tanksteuereinrichtung 60 weist eine Datenausgabeeinheit 63 auf, über die Daten und/oder Signale über eine erste Datenaustauschverbindung 101 an die Aktuatoren 20-25 übertragbar sind. Die erste Datenaustauschverbindung 101 kann auch als erste Datenleitung 101 oder als erste Signalleitung 101 oder allgemein als erste elektrische Leitung 101 bezeichnet werden.

Der Füllstandsensor 13 ist dazu ausgebildet, einen Füllstand des Kraftfahrzeugtanks 10 repräsentierende Daten über eine zweite Datenaustauschverbindung 102 an die Tanksteuereinrichtung 60 zu übertragen. Hierzu weist die Tanksteuereinrichtung 60 eine zweite Datenempfangseinheit 62 auf, über die die zweite Datenaustauschverbindung zwischen dem Füllstandsensor 13 und der Tanksteuereinrichtung 60 ermöglicht ist. Die zweite Datenaustauschverbindung 102 kann auch als zweite Datenleitung 102 oder als zweite Signalleitung 102 oder allgemein als zweite elektrische Leitung 102 bezeichnet werden.

Die Tanksteuereinrichtung 60 wiederrum ist dazu ausgebildet, bei Empfang von Daten, die einem vorbestimmten Füllstand des Betriebsflüssigkeitsbehälters 10 repräsentieren, über die erste Datenaustauschverbindung 101 ein Befüllstoppsignal an zumindest einen Aktuator 20-25, 44 zu übertragen, wobei der zumindest eine Aktuator 20-25, 44 bei Empfang des Befüllstoppsignals ein Beenden eines Befüllvorgangs des Kraftfahrzeugtanks 10 initiiert. Die von der Tanksteuereinrichtung 60 empfangenen Daten, die den Füllstand des Kraftfahrzeugtanks 10 repräsentieren, werden von dem Füllstandsensor 13 an die Tanksteuereinrichtung 60 über die zweite Datenaustauschverbindung 102 und die zweite Datenempfangseinheit 62 übertragen.

Durch Bereitstellen des Kraftfahrzeugtanks 10 mit dem Füllstandsensor 13, der Tanksteuereinrichtung 60 und die elektrisch und/oder elektromagnetisch betätigbaren Aktuatoren 20-25, 44 ist es durch den so ausgebildeten Kraftfahrzeugtank 10 möglich, ein Beenden eines Befüllvorgangs des Kraftfahrzeugtanks 10 durch die Tanksteuereinrichtung 60 zu initiieren, bevor beispielsweise ein maximaler Füllgrad des Kraftfahrzeugtanks 10 erreicht ist. Da der Befüllvorgang nicht mechanisch, sondern elektrisch und/oder elektromagnetisch, was im vorliegenden Fall einer elektromechanischen Betätigung entspricht, initiiert wird, kann seitens der Tanksteuereinrichtung 60 eine Kompensation einer eventuell vorliegenden Schräglage des Kraftfahrzeugtanks 10 durchgeführt werden. Denn das Beenden des Befüllvorgangs wird nicht durch ein Aufschwimmen eines Ventilkörpers in einem Ventil realisiert, sondern wird mittels eines elektrischen Signals, das von der Tanksteuereinrichtung 60 ausgegeben wird, initiiert.

Da das Beenden des Befüllvorgangs durch die Tanksteuereinrichtung 60 initiiert wird, kann das Befüllstoppsignal an einen der Aktuatoren 20-25, 44 zu einem Zeitpunkt ausgegeben werden, bevor der maximale Befüllgrad des Kraftfahrzeugtanks 10 erreicht ist, sodass anschließend, nach Ausgeben des Befüllstoppsignals, ein marktspezifisches Abschalten unter Berücksichtigung unterschiedlicher Abschaltcharakteristiken durchgeführt werden kann. So ist es beispielsweise möglich, dass kurz vor Erreichen eines maximalen Befüllgrads des Kraftfahrzeugtanks 10 der Befüllvorgang beendet wird, woraufhin die Befüllvorrichtung 90 den Befüllvorgang so lange unter beispielsweise einer verminderten Befüllgeschwindigkeit fortführt, bis eine in den Kraftfahrzeugtank 10 eingefüllte Kraftstoffmenge einem glatten Währungsbetrag entspricht. Unter einem glatten Währungsbetrag ist dabei ein Währungsbetrag zu verstehen, der keine Nachkommastellen aufweist beziehungsweise bei dem die Nachkommastellen 0 sind. Ein Beispiel eines glatten Währungsbetrags sind 37 EUR oder 42 Dollar oder 5100 Yen.

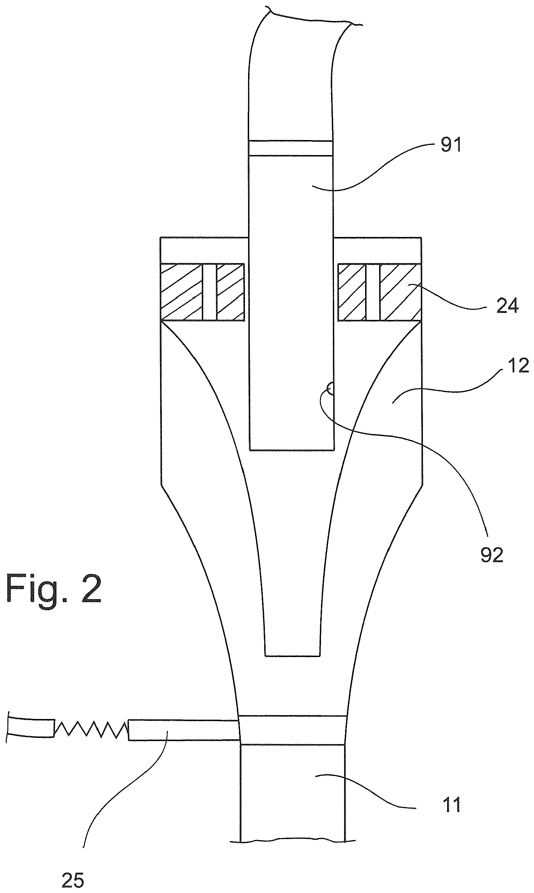

Weiterhin ist es auch möglich, nach Initiieren des Beenden des Befüllvorgangs das Befüllen seitens der Befüllvorrichtung 90 mit einer verminderten Förderrate fortzuführen, sodass beispielsweise trotz Unterbinden einer Entlüftung des Kraftfahrzeugtanks 10 in das Einfüllrohr 11 eingefüllter Kraftstoff in dem Einfüllrohr 11 langsam ansteigt und nach Erreichen einer Abschaltbohrung 92 (siehe Figur 2) des Zapfventils 91 der Kraftstoff für eine vorbestimmte Zeit im Einfüllrohr 11 beziehungsweise im Einfüllstutzen 12 stehenbleibt, bevor dieser langsam in den Kraftfahrzeugtank 10 hineinläuft, sodass der Kraftstoff von dem Betanker visuell wahrnehmbar ist.

Ferner ist es auch möglich, dass das Beenden des Befüllvorgangs durch Ausgeben eines Befüllstoppsignals von der Tanksteuereinrichtung 60 an einen der Aktuatoren 20-25, 44 zu einem Zeitpunkt vor Erreichen des maximalen Befüllgrads des Kraftfahrzeugtanks 10 initiiert wird, der anschließend ein bis zu dreifaches auch manuelles Nachtanken ermöglicht.

In Figur 1 ist der Kraftfahrzeugtank 10 mit Aktuatoren 20-25, 44 dargestellt. Jedoch ist die vorliegende Erfindung nicht derart zu verstehen, dass sämtliche Aktuatoren 20-25 notwendig sind, um ein Beenden des Befüllvorgangs des Kraftfahrzeugtanks 10 zu initiieren. Vielmehr kann ein Beenden des Befüllvorgangs des Kraftfahrzeugtanks 10 durch lediglich einen einzigen elektrisch und/oder elektromagnetisch betätigbaren Aktuator 20-25, 44 initiiert werden. Folglich ist die vorliegende Erfindung derart zu verstehen, dass der erfindungsgemäße Kraftfahrzeugtank 10 lediglich auch einen einzigen elektrisch und/oder elektromagnetisch betätigbaren Aktuator 20-25, 44 aufweisen kann. Daher ist Figur 1 so zu verstehen, dass der Kraftfahrzeugtank 10 zumindest einen der elektrisch und/oder elektromagnetisch betätigbaren Aktuatoren 20-25, 44 aufweist. Jedoch kann der Kraftfahrzeugtank 10 auch mehrere der elektrisch und/oder elektromagnetisch betätigbaren Aktuatoren 20-25, 44 aufweisen.

Gemäß einer ersten Ausführungsform der vorliegenden Erfindung ist der elektrisch und/oder elektromagnetisch betätigbare Aktuator 22 als Betankungsentlüftungsventil 22 ausgebildet, das im Kraftfahrzeugtank 10 angeordnet ist. In dem dargestellten Ausführungsbeispiel ist ein Betriebsentlüftungsventil 21 während der Betankung verschlossen, wohingegen das Betankungsentlüftungsventil 22 während der Betankung geöffnet ist. Das Betriebsentlüftungsventil 21 ist mittels einer Betriebsentlüftungsleitung 30 und das Betankungsentlüftungsventil 22 ist mittels einer Betankungsentlüftungsleitung 31 mit einem Aktivkohlefilter 40 zum Filtern von Kohlenwasserstoffen fluidverbunden. Dabei sind die Betriebsentlüftungsleitung 30 und die Betankungsentlüftungsleitung 31 vor dem Aktivkohlefilter 40 zu einer gemeinsamen Entlüftungsleitung zusammengeführt und stehen miteinander in Fluidverbindung. Bei Empfang eines Befüllstoppsignals, das von der Tanksteuereinrichtung 60 über die Datenausgabeeinheit 63 an das Betankungsentlüftungsventil 22 ausgegeben wird, schließt das Betankungsentlüftungsventil 22, so dass ein Entlüften des Kraftfahrzeugtanks 10 während des Betankungsvorganges unterbunden wird. Durch weiteres Einleiten von Kraftstoff über das Einfüllrohr 11 in den Kraftfahrzeugtank 10 steigt der Tankinnendruck, so dass in das Einfüllrohr 11 eingeleiteter Kraftstoff in dem Einfüllrohr 11 ansteigt, bis der Kraftstoff die Abschaltbohrung 92 des eingesetzten Zapfventils 91 (siehe Figur 2) erreicht, wodurch der Befüllvorgang beendet wird.

Das Betankungsentlüftungsventil 22 ist elektrisch und/oder elektromagnetisch zwischen einer Offenstellung und einer Schließstellung betätigbar/verstellbar, wobei in dessen Offenstellung der Kraftfahrzeugtank 10 über das Betankungsentlüftungsventil 22 über das Aktivkohlefilter 40 mit der Atmosphäre fluidverbunden ist, und wobei in der Schließstellung Betankungsentlüftungsventils 22 der Kraftfahrzeugtank 10 von der Atmosphäre fluidgetrennt ist.

In Figur 1 ist dargestellt, dass die Fluidverbindung des Kraftfahrzeugtanks 10 zur Atmosphäre über das Aktivkohlefilter 40 und ein Spülventil / Auslassventil 41 bzw. ein Diagnoseventil 44 erfolgt, jedoch ist das Aktivkohlefilter 40 für die erste Ausführungsform vorliegende Erfindung nicht obligatorisch sondern optional.

In einer zweiten Ausführungsform der vorliegenden Erfindung weist der Kraftfahrzeugtank 10 ein Aktivkohlefilter 40 auf, das über ein Absperrventil 23 mit dem Betriebsentlüftungsventil 21 und dem Betankungsentlüftungsventil 22 und somit dem Kraftfahrzeugtank 10 fluidverbunden ist. Bei dem dargestellten Ausführungsbeispiel müssen das Betriebsentlüftungsventil 21 und das Betankungsentlüftungsventil 22 nicht notwendigerweise elektrisch und/oder elektromagnetisch betätigbar sein, sondern lediglich das Absperrventil 23 muss elektrisch und/oder elektromagnetisch betätigbar sein. Jedoch ist es selbstverständlich auch möglich, dass auch bei dem zweiten Ausführungsbeispiel der vorliegenden Erfindung das Betriebsentlüftungsventil 21 und auch das Betankungsentlüftungsventil 22 neben dem Absperrventil 23 elektrisch und/oder elektromagnetisch betätigbar sind.

Das Absperrventil 23 ist zwischen dem Kraftfahrzeugtank 10 und dem Aktivkohlefilter 40 angeordnet und elektrisch und/oder elektromagnetisch zwischen einer Offenstellung und einer Schließstellung betätigbar/verstellbar, wobei in der Offenstellung des Absperrventils 23 der Kraftfahrzeugtank 10 mittels des Absperrventil 23 mit dem Aktivkohlefilter 40 fluidverbunden ist, und wobei in der Schließstellung des Absperrventils 23 der Kraftfahrzeugtank 10 von dem Aktivkohlefilter 40 mittels des Absperrventils 23 fluidgetrennt ist. Bei Empfang eines Befüllstoppsignals, dass von der Datenausgabeeinheit 63 der Tanksteuereinrichtung 60 an das Absperrventil 23 über die erste Datenaustauschverbindung 101 übertragen wird, schließt das Absperrventil 23, so dass eine Entlüftung des Kraftstoffbehälters 10 während des Betankungsvorganges unterbunden wird, wodurch durch weiteres Einfüllen von Kraftstoff über das Einfüllrohr 11 in den Kraftfahrzeugtank 10 dessen Innendruck ansteigt. Durch weiteres Einleiten von Kraftstoff in das Einfüllrohr 11 steigt der Kraftstoff in dem Einfüllrohr 11 an, bis eine Abschaltbohrung 92 des Zapfventils 91 (siehe Figur 2) erreicht wird, woraufhin der Befüllvorgang beendet wird.

In einer dritten Ausführungsform der vorliegenden Erfindung ist der Aktuator 20 als ein Rückschlagventil 20 ausgebildet, das in dem Einfüllrohr 11 angeordnet ist. Das Rückschlagventil 20 ist elektrisch und/oder elektromagnetisch zwischen einer Offenstellung und einer Schließstellung betätigbar, wobei in der Offenstellung des Rückschlagventils 20 der Kraftfahrzeugtank 10 mit dem Einfüllrohr 11 fluidverbunden ist, und wobei in der Schließstellung des Rückschlagventils 20 der Kraftfahrzeugtank 10 von dem Einfüllrohr 11 mittels des Rückschlagventils 20 fluidgetrennt ist oder zumindest die lichte Weite des Einfüllrohrs 11 mittels des Rückschlagventils 20 reduziert ist.

Bei Empfang eines Befüllstoppsignals, das von der Datenausgabeeinheit 63 der Tanksteuerungseinrichtung 60 über die erste Datenaustauschverbindung 101 an das Rückschlagventil 20 ausgegeben wird, wird das Rückschlagventil 20 in dessen Schließstellung überführt, woraufhin in das Einfüllrohr 11 eingeleiteter Kraftstoff nicht mehr oder lediglich verlangsamt in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis die Abschaltbohrung 92 des Zapfventils 91 erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Gemäß einer vierten Ausführungsform der vorliegenden Erfindung ist der zumindest eine elektrisch und/oder elektromagnetisch betätigbare Aktuator 25 als ein Störkörper 25 ausgebildet, der im Einfüllrohr 11 angeordnet ist. Der Störkörper 25 ist dabei zwischen einer Offenstellung und einer Störstellung elektrisch und/oder elektromagnetisch betätigbar/verstellbar, wobei in der Offenstellung des Störkörpers 25 die lichte Weite des Einfüllrohrs 11 nicht reduziert ist, und wobei in der Störstellung des Störkörpers 25 dieser in das Einfüllrohr 11 hineinragt und somit die lichte Weite des Einfüllrohrs 11 reduziert.

Bei Empfang eines Befüllstoppsignals, das von der Datenausgabeeinheit 63 der Tanksteuerungseinrichtung 60 über die erste Datenaustauschverbindung 101 an den Störkörper 25 ausgegeben wird, wird der Störkörper 25 in dessen Schließstellung überführt, woraufhin in das Einfüllrohr 11 eingeleiteter Kraftstoff nicht mehr oder mit einer verminderten Geschwindigkeit in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis die Abschaltbohrung 92 des Zapfventils 91 erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

In Figur 2 ist im schematischen Querschnitt ein Einfüllstutzen 12 samt Einfüllrohr 11 eines Kraftfahrzeugtanks 10 gemäß einer fünften Ausführungsform der vorliegenden Erfindung dargestellt. Bei dem Kraftfahrzeugtank 10 gemäß der fünften Ausführungsform der vorliegenden Erfindung ist der zumindest eine Aktuator 24 als ein Elektromagnet 24 ausgebildet, der im Einfüllstutzen 12 angeordnet ist. Bei dem dargestellten Ausführungsbeispiel ist der Elektromagnet 24 in Form eines Ringmagneten 24 ausgebildet. Der Elektromagnet 24 ist dabei zwischen einem Aktivzustand und einem Passivzustand betätigbar/schaltbar, wobei im Aktivzustand der Elektromagnet 24 ein Magnetfeld erzeugt, und wobei der Elektromagnet 24 im Passivzustand kein Magnetfeld erzeugt.

Durch Übertragen eines Befüllstoppsignals von der Datenausgabeeinheit 63 der Tanksteuereinrichtung 60 an den Elektromagneten 24 wird dieser in dessen Passivzustand überführt, so dass kein Magnetfeld erzeugt wird und folglich ein in den Einfüllstutzen 12 eingeführtes Zapfventil 91 verschlossen wird, wenn dieses entsprechend magnetisch aktivierbar bzw. deaktivierbar ausgebildet ist. Ein entsprechend ausgebildeter Kraftfahrzeugtank 10 bietet den Vorteil, dass zum Beenden eines Befüllvorganges kein Druckaufbau innerhalb des Kraftfahrzeugtanks 10 notwendig ist, so dass zum einen ein optional bereitgestelltes Aktivkohlefilter 40 weniger stark beladen wird und darüber hinaus keine Deformation des Kraftfahrzeugtanks 10 durch Druckbeaufschlagung erfolgt, wodurch eine erhöhte Genauigkeit der Bestimmung eines Befüllzustandes des Kraftfahrzeugtanks 10 ermöglicht ist. Darüber hinaus bietet der Kraftfahrzeugtank 10 gemäß der fünften Ausführungsform den Vorteil, dass zum Beenden des Befüllvorganges noch nicht einmal das Einfüllrohr 11 mit Kraftstoff befüllt werden muss, so dass ein sehr zielgenauer Befüllstoppsignal erreichbar ist.

Gemäß einer fünften Ausführungsform der vorliegenden Erfindung ist die Tanksteuerungseinrichtung 60 mittels einer dritten Datenaustauschverbindung 103 mit der Befüllvorrichtung 90 verbunden. Die Datenverbindung verläuft dabei über eine Signalsendeeinheit 65, die auch als Datensendeeinheit 65 bezeichnet werden kann, und über die üblicherweise als drahtlose Kommunikationsverbindung ausgebildete dritte Datenaustauschverbindung 103. Die drahtlose Datenaustauschverbindung 103 kann über eine Nahfeldkommunikation (NFC, englisch: near field communication), Bluetooth, GSM (global system for mobile communication) oder über eine andere drahtlose Datenverbindung realisiert sein. Die Tanksteuereinrichtung 60 ist dazu ausgebildet, bei dem Empfang von Daten, die dem vorbestimmten Füllstand des Kraftstoffbehälters 10 repräsentieren, über die dritte Datenaustauschverbindung 103 das Befüllstoppsignal an die Befüllvorrichtung 90 zu übertragen. Das an die Befüllvorrichtung 90 gesendete Befüllstoppsignal bewirkt, dass von der Befüllvorrichtung 90 kein weiterer Kraftstoff beziehungsweise keine weitere Betriebsflüssigkeit in den Kraftstofftank 10/Betriebsflüssigkeitsbehälter 10 eingeleitet wird. Dies kann beispielsweise dadurch realisiert werden, dass eine in der Befüllvorrichtung 90 vorgesehene Kraftstoffpumpe gestoppt wird. Ferner kann ein Stoppen des Befüllvorgangs durch ein Verschließen des Zapfventils 91 realisiert werden.

Der entsprechend ausgebildete Kraftfahrzeugtank 10 bietet den Vorteil, dass der Befüllstopp sehr zielgenau realisiert werden kann, da zum Beenden des Befüllvorgangs innerhalb des Kraftfahrzeugtanks 10 kein Druck aufgebaut werden muss.

Aus Figur 1 ist weiterhin ersichtlich, dass der Kraftfahrzeugtank 10 ferner einen Neigungssensor 80 zum Bestimmen einer Neigung des Kraftfahrzeugtanks 10 umfasst. Der Neigungssensor 80 ist mit jeder der ersten bis sechsten Ausführungsform der vorliegenden Erfindung kombinierbar. Der Neigungssensor 80 ist mit der Tanksteuereinrichtung 60 über eine vierte Datenaustauschverbindung 104 in Form einer vierten Datenleitung 104 verbunden, wobei die vierte Datenleitung 104 mit einer dritten Empfangseinheit 64 der Tanksteuereinrichtung 60 verbunden ist. Der Neigungssensor 80 ist dazu ausgebildet, über die von diesem ermittelte und die Neigung des Kraftfahrzeugtanks 10 repräsentierende Daten an die Tanksteuereinrichtung 60 zu übertragen.

Die Tanksteuereinrichtung 60 ist dabei dazu ausgebildet, zusätzlich zu den vom Füllstandsensor 13 übertragenen Daten die von dem Neigungssensor 80 übertragenen Daten zu empfangen und einen Ist-Füllstand des Kraftfahrzeugtanks 10 unter Berücksichtigung der Daten des Füllstandsensors 13 und des Neigungssensors 80 zu ermitteln. Somit wird die Bestimmung des Füllstands des Kraftfahrzeugtanks 10 nochmals präziser ermöglicht, da eine Schrägstellung des Kraftfahrzeugs und somit des Kraftfahrzeugtanks 10 nochmals verbessert berücksichtigt werden kann.

Der Kraftfahrzeugtank 10 muss zur Berücksichtigung einer Raumlage beziehungsweise Neigung des Kraftfahrzeugtanks 10 nicht notwendigerweise den Neigungssensor 80 aufweisen, da üblicherweise in einer Bordelektronik eines Kraftfahrzeugs ein Neigungssensor vorhanden ist, dessen Daten in die dritte Datenempfangseinheit 64 der Tanksteuereinrichtung 60 übertragbar sind.

Aus Figur 1 ist ferner ersichtlich, dass die Tanksteuereinrichtung 60 eine Datenempfangseinheit 61 umfasst, über die elektronische Daten an die Tanksteuereinrichtung 60 übertragbar sind. Die Datenempfangseinheit 61 ist über eine Datenleitung 100 mit einer Elektronikeinheit 70 verbunden, so dass eine Datenaustauschverbindung zwischen dem Tanksteuerungseinrichtung 60 und der Elektronikeinheit 70 ermöglicht ist. Die Elektronikeinheit 70 wiederum umfasst einen elektronischen Datenspeicher 71, so dass die in dem elektronischen Datenspeicher 71 gespeicherten Daten über die Datenleitung 100 an die Elektronikeinheit 60 übertragbar sind. Die Datenleitung 100 kann dabei dergestalt sein, dass Daten bidirektional zwischen der Elektronikeinheit 70 und der Tanksteuerungseinrichtung 60 übertragbar sind. Jedoch kann die Datenleitung 100 auch dergestalt sein, dass lediglich Daten von der Elektronikeinheit 70 hin zur Tanksteuereinrichtung 60 übertragbar sind. Die Elektronikeinheit 70 kann beispielsweise ein Bordcomputer 70 des den Kraftfahrzeugtank 10 aufweisenden Kfz sein. Weiterhin kann die Elektronikeinheit 70 aber auch ein mobiles Endgerät 70, beispielsweise ein Smartphone 70 sein. Darüber hinaus ist es auch möglich, dass es sich bei der Elektronikeinheit 70 um eine Datenverarbeitungsanlage 70 handelt, die zur Erzeugung und Bereitstellung einer Datenwolke ausgebildet ist.

Folglich kann eine in den Kraftfahrzeugtank 10 einzufüllende Kraftstoffmenge durch die Elektronikeinheit 70 bestimmt/ermittelt werden. Daten, die die einzufüllende Kraftstoffmenge repräsentieren, werden über die Datenleitung an die Tanksteuereinrichtung 60 übertragen, wobei bei Erreichen der einzufüllenden Kraftstoffmenge ein Befüllstoppsignal über die erste Datenaustauschverbindung 101 an zumindest einen der Aktuatoren 20-25, 44 und/oder über die dritte Datenaustauschverbindung 103 an die Befüllvorrichtung 90 gesendet wird, woraufhin ein Beenden des Befüllvorganges initiiert wird.

Bei dem in Figur 1 dargestellten Kraftfahrzeugtank 10 ist der Aktivkohlefilter 40 über ein Spülventil 41 und eine Spülleitung 43 mit einem Ansaugtrakt 51 des Motors 50 fluidverbunden. Somit ist eine Spülung des Aktivkohlefilters 40 durch Ansaugluft des Motors 50 ermöglicht. Ferner ist aus Figur 1 ersichtlich, dass die Betriebsentlüftungsleitung 30 und die Betankungsentlüftungsleitung 31 über ein Drosselventil 42 mit dem Ansaugtrakt 51 des Motors 50 fluidverbunden sind. Somit ist es ermöglicht, unter Druck stehendes Gas aus dem Kraftstoffbehälter 10 direkt in den Ansaugtrakt 51 über das Drosselventil 42 und die Spielleitung 43 zu leiten, so dass das mit Kohlenwasserstoffen gesättigte Gas direkt zur Verbrennung innerhalb des Motors 50 verwendet werden kann.

### Bezugszeichenliste:

- 10: Betriebsflüssigkeitsbehälter / Kraftfahrzeugtank
- 11: Einfüllrohr (des Betriebsflüssigkeitsbehälters)
- 12: Einfüllstutzen
- 13: Füllstandsensor
- 14: Betriebsflüssigkeitsfördereinrichtung / Kraftstofffördereinrichtung / Kraftstoffpumpe
- 15: Betriebsflüssigkeitsleitung / Kraftstoffleitung
- 16: Rezirkulationsleitung
- 20: Aktuator / Rückschlagventil
- 21: Aktuator / Betriebsentlüftungsventil
- 22: Aktuator / Betankungsentlüftungsventil
- 23: Aktuator / Absperrventil / FTIV
- 24: Aktuator / Elektromagnet (innerhalb des Einfüllstutzens)
- 25: Aktuator / Störkörper (innerhalb des Einfüllstutzens)
- 30: Betriebsentlüftungsleitung
- 31: Betankungsentlüftungsleitung
- 40: Aktivkohlefilter
- 41: Spülventil / Auslassventil / Purge-Ventil
- 42: Drosselventil
- 43: Spülleitung
- 44: Diagnoseventil / OBD-Ventil
- 50: Motor
- 51: Ansaugtrakt (des Motors)
- 60: Tanksteuereinrichtung / Tanksteuerungseinrichtung (des Betriebsflüssigkeitsbehälters / Kraftfahrzeugtanks)
- 61: (erste) Datenempfangseinheit (der Tanksteuereinrichtung)
- 62: (zweite) Datenempfangseinheit (der Tanksteuereinrichtung)
- 63: Datenausgabeeinheit
- 64: (dritte) Datenempfangseinheit (de Tanksteuereinrichtung)
- 65: Signalsendeeinheit / Datensendeeinheit
- 70: Elektronikeinheit / Bordcomputer / mobiles Endgerät / Datenverarbeitungsanlage (zur Erzeugung und Bereitstellung einer Datenwolke)
- 71: elektronischer Datenspeicher (der Elektronikeinheit)
- 80: Neigungssensor
- 90: Befüllvorrichtung
- 91: Zapfventil
- 92: Abschaltöffnung (des Zapfventils)

- 100: Datenleitung (zwischen Elektronikeinheit und Tanksteuereinrichtung)
- 101: (erste) Datenaustauschverbindung / Datenleitung / Signalleitung / elektrische Leitung
- 102: (zweite) Datenaustauschverbindung / Datenleitung / Signalleitung / elektrische Leitung
- 103: (dritte) Datenaustauschverbindung / Datenleitung / Signalleitung / elektrische Leitung
- 104: (vierte) Datenaustauschverbindung / Datenleitung / Signalleitung / elektrische Leitung
- G: Gasvolumen (im Betriebsflüssigkeitsbehälter / Kraftfahrzeugtank)
- K: Betriebsflüssigkeit / Kraftstoff (im Kraftfahrzeugtank)

## Patentansprüche

1. Betriebsflüssigkeitsbehälter (10) für ein Kraftfahrzeug mit den folgenden Merkmalen:
- der Betriebsflüssigkeitsbehälter (10) umfasst einen Füllstandsensor (13), eine Tanksteuereinrichtung (60) und einen elektrisch und/oder elektromagnetisch betätigbaren Aktuator (20, 21, 22, 23, 24, 25, 44), mittels dem ein Beenden eines Befüllvorganges des Betriebsflüssigkeitsbehälters (10) initiierbar ist;
- die Tanksteuereinrichtung (60) ist mittels einer ersten Datenaustauschverbindung (101) mit dem Aktuator (20, 21, 22, 23, 24, 25, 44) und mittels einer zweiten Datenaustauschverbindung (102) mit dem Füllstandsensor (13) verbunden;
- der Füllstandsensor (13) ist dazu ausgebildet, einen Füllstand des Betriebsflüssigkeitsbehälters (10) repräsentierende Daten über die zweite Datenaustauschverbindung (102) an die Tanksteuereinrichtung (60) zu übertragen;
- die Tanksteuereinrichtung (60) ist dazu ausgebildet, bei Empfang von Daten, die einem vorbestimmten Füllstand des Betriebsflüssigkeitsbehälters (10) repräsentieren, über die erste Datenaustauschverbindung (101) ein Befüllstoppsignal an den Aktuator (20, 21, 22, 23, 24, 25, 44) zu übertragen; und
- bei Empfang des Befüllstoppsignals initiiert der Aktuator (20, 21, 22, 23, 24, 25, 44) ein Beenden eines Befüllvorganges des Betriebsflüssigkeitsbehälters (10).

2. Betriebsflüssigkeitsbehälter (10) nach Anspruch 1, **gekennzeichnet durch** die folgenden Merkmale:
- die Tanksteuereinrichtung (60) ist mittels einer dritten Datenaustauschverbindung (103) mit einer Befüllvorrichtung (90, 91) verbunden; und
- die Tanksteuereinrichtung (60) ist dazu ausgebildet, bei Empfang von Daten, die dem vorbestimmten Füllstand des Betriebsflüssigkeitsbehälters (10) repräsentieren, über die dritte Datenaustauschverbindung (103) das Befüllstoppsignal an die Befüllvorrichtung (90, 91) zu übertragen.

3. Betriebsflüssigkeitsbehälter (10) nach einem der vorhergehenden Ansprüche, **gekennzeichnet durch** die folgenden Merkmale:
- die Tanksteuereinrichtung (60) ist dazu ausgebildet, zusätzlich zu den von dem Füllstandsensor (13) übertragenen Daten weitere eine Neigung des Betriebsflüssigkeitsbehälters (10) repräsentierende Daten zu empfangen; und
- die Tanksteuereinrichtung (60) ist dazu ausgebildet, mittels der den Füllstand repräsentierenden Daten und der die Neigung des Betriebsflüssigkeitsbehälters (10) repräsentierenden Daten einen Ist-Füllstand des Betriebsflüssigkeitsbehälters (10) zu ermitteln.

4. Betriebsflüssigkeitsbehälter (10) nach Anspruch 3, **gekennzeichnet durch** die folgenden Merkmale:
- der Betriebsflüssigkeitsbehälter (10) umfasst einen Neigungssensor (80), mittels dem die Neigung des Betriebsflüssigkeitsbehälters (10) bestimmbar ist; und
- der Neigungssensor (80) ist mit der Tanksteuereinrichtung (60) über die zweite Datenaustauschverbindung (102) und/oder eine vierte Datenaustauschverbindung (104) verbunden, über die von dem Neigungssensor ermittelte und die Neigung des Betriebsflüssigkeitsbehälters (10) repräsentierende Daten an die Tanksteuereinrichtung (60) übertragbar sind.

5. Betriebsflüssigkeitsbehälter (10) nach einem der vorhergehenden Ansprüche, **gekennzeichnet durch** die folgenden Merkmale:
- der zumindest eine Aktuator (21, 22) ist als ein Betriebs- und/oder Betankungsentlüftungsventil (21, 22) ausgebildet, das im und/oder am Betriebsflüssigkeitsbehälter (10) angeordnet ist;
- das Betriebs- und/oder Betankungsentlüftungsventil (21, 22) ist elektrisch und/oder elektromagnetisch zwischen einer Offenstellung und einer Schließstellung betätigbar;
- in der Offenstellung des Betriebs- und/oder Betankungsentlüftungsveritils (21, 22) ist der Betriebsflüssigkeitsbehälter (10) mittels des Betriebs- und/oder Betankungsentlüftungsventils (21, 22) mit einer Entlüftungsleitung (30, 31) fluidverbunden; und
- in der Schließstellung des Betriebs- und/oder Betankungsentlüftungsventils (21, 22) ist der Betriebsflüssigkeitsbehälter (10) von der Entlüftungsleitung (30, 31) mittels des Betriebs- und/oder Betankungsentlüftungsventils (21, 22) fluidgetrennt.

6. Betriebsflüssigkeitsbehälter (10) nach einem der vorhergehenden Ansprüche, **gekennzeichnet durch** die folgenden Merkmale:
- der zumindest eine Aktuator (20) ist als ein Rückschlagventil (20) ausgebildet, das in und/oder an einem in den Betriebsflüssigkeitsbehälter (10) mündenden Einfüllrohr (11) angeordnet ist;
- das Rückschlagventil (20) ist elektrisch und/oder elektromagnetisch zwischen einer Offenstellung und einer Schließstellung betätigbar;
- in der Offenstellung des Rückschlagventils (20) ist der Betriebsflüssigkeitsbehälter (10) mit dem Einfüllrohr (11) fluidverbunden;
- in der Schließstellung des Rückschlagventils (20) ist der Betriebsflüssigkeitsbehälter (10) von dem Einfüllrohr (11) mittels des Rückschlagventils (20) fluidgetrennt oder die lichte Weite des Einfüllrohrs (11) ist mittels des Rückschlagventils (20) reduziert.

7. Betriebsflüssigkeitsbehälter (10) nach einem der vorhergehenden Ansprüche, **gekennzeichnet durch** die folgenden Merkmale:
- der zumindest eine Aktuator (25) ist als ein Störkörper (25) ausgebildet, der in einem in den Betriebsflüssigkeitsbehälter (10) mündenden Einfüllrohr (11) angeordnet ist;
- der Störkörper (25) ist elektrisch und/oder elektromagnetisch zwischen einer Offenstellung und einer Störstellung betätigbar;
- in der Offenstellung des Störkörpers (25) ist eine lichte Weite des Einfüllrohres (25) nicht reduziert; und
- in der Störstellung des Störkörpers (25) ragt dieser in das Einfüllrohr (11) und reduziert die lichte Weite des Einfüllrohrs (11).

8. Betriebsflüssigkeitsbehälter (10) nach einem der vorhergehenden Ansprüche, **gekennzeichnet durch** die folgenden Merkmale:
- der zumindest eine Aktuator (23) ist als Absperrventil (23) ausgebildet, das zwischen dem Betriebsflüssigkeitsbehälter (10) und einem Aktivkohlefilter (40) angeordnet ist;
- das Absperrventil (23) ist elektrisch und/oder elektromagnetisch zwischen einer Offenstellung und einer Schließstellung betätigbar;
- in der Offenstellung des Absperrventils (23) ist der Betriebsflüssigkeitsbehälter (10) mittels des Absperrventils (23) mit dem Aktivkohlefilter (40) fluidverbunden; und
- in der Schließstellung des Absperrventils (23) ist des Betriebsflüssigkeitsbehälter (10) von dem Aktivkohlefilter (40) mittels des Absperrventils (23) fluidgetrennt.

9. Betriebsflüssigkeitsbehälter (10) nach einem der vorhergehenden Ansprüche, **gekennzeichnet durch** die folgenden Merkmale:
- der zumindest eine Aktuator (23) ist als Absperrventil (23) ausgebildet, das zwischen einem Aktivkohlefilter (40) und der Atmosphäre angeordnet ist;
- das Absperrventil (23) ist elektrisch und/oder elektromagnetisch zwischen einer Offenstellung und einer Schließstellung betätigbar;
- in der Offenstellung des Absperrventils (23) ist der Betriebsflüssigkeitsbehälter (10) über den Aktivkohlefilter (40) und über das Absperrventils (23) mit der Atmosphäre fluidverbunden; und
- in der Schließstellung des Absperrventils (23) ist der Betriebsflüssigkeitsbehälter (10) und der Aktivkohlefilter (40) mittels des Absperrventils (23) von der Atmosphäre fluidgetrennt.

10. Betriebsflüssigkeitsbehälter (10) nach einem der vorhergehenden Ansprüche, **gekennzeichnet durch** die folgenden Merkmale:
- der zumindest eine Aktuator (24) ist als ein Elektromagnet (24) ausgebildet, der in einem Einfüllstutzen (12) eines in den Betriebsflüssigkeitsbehälter (10) mündenden Einfüllrohrs (11) angeordnet ist;
- der Elektromagnet (24) ist zwischen einem Aktivzustand und einem Passivzustand betätigbar;
- im Aktivzustand erzeugt der Elektromagnet (24) ein Magnetfeld; und
- im Passivzustand erzeugt der Elektromagnet (24) kein Magnetfeld.

11. Betriebsflüssigkeitsbehälter (10) nach einem der vorhergehenden Ansprüche, **gekennzeichnet durch** die folgenden Merkmale:
- die Tanksteuereinrichtung (60) weist eine Sollfüllstand-Signaleingangsleitung auf, über die einen Sollfüllstand repräsentierende Daten an die Tanksteuereinrichtung (60) übertragbar sind; und
- die Tanksteuereinrichtung (60) ist dazu ausgebildet, das Befüllstoppsignal derart auszugeben, dass nach Beenden des Befüllvorganges der Füllstand des Betriebsflüssigkeitsbehälters (10) dem Sollfüllstand entspricht.

12. Betriebsflüssigkeitsbehälter (10) nach Anspruch 11, **gekennzeichnet durch** die folgenden Merkmale:
- die Tanksteuereinrichtung (60) weist einen Preissignaleingangsleitung auf, über die Preisinformationen von in den Betriebsflüssigkeitsbehälter (10) einzufüllender Betriebsflüssigkeit übertragbar sind; und
- die Tanksteuereinrichtung (60) ist derart ausgebildet, dass diese unter Berücksichtigung der Preisinformation und des Sollfüllstandes das Befüllstoppsignal derart ausgibt, dass nach Beenden des Befüllvorganges ein Preis der in den Betriebsflüssigkeitsbehälters eingefüllten Betriebsflüssigkeit einem glatten Währungsbetrag entspricht.

13. Verfahren zum Befüllen eines Betriebsflüssigkeitsbehälters (10) mittels einer Befüllvorrichtung (90), wobei der Betriebsflüssigkeitsbehälter (10) die Merkmale eines der vorhergehenden Ansprüche und ein Betriebs- und/oder Betankungsentlüftungsventil (21, 22) aufweist, und wobei das Verfahren folgende Verfahrensschritte aufweist:
- Übertragen eines Entlüftungssignals an zumindest das Betriebs- und/oder Betankungsentlüftungsventil (21, 22) mittels der Tanksteuereinrichtung (60);
- Ermitteln des Füllstandes des Betriebsflüssigkeitsbehälters (10) mittels des Füllstandsensors (13); und
- Ausgeben eines Befüllstoppsignals an zumindest einen Aktuator (20, 21, 22, 23, 24, 25, 44), wenn der Füllstand des Betriebsflüssigkeitsbehälters (10) einen Sollfüllstand erreicht hat, wobei der Sollfüllstand niedriger ist als ein Maximalbefüllstand des Betriebsflüssigkeitsbehälters (10).

14. Verfahren nach Anspruch 13, **gekennzeichnet durch** die folgenden Merkmale:
- Etablieren einer Datenaustauschverbindung zwischen der Tanksteuereinrichtung (60) und der Befüllvorrichtung (90);
- Übertragen eines Befüllstartsignals von der Tanksteuereinrichtung (60) an die Befüllvorrichtung (90) über die Datenaustauschverbindung, wenn das Entlüftungssignal an das Betriebs- und/oder Betankungsentlüftungsventil (21, 22) übertragen wird, woraufhin die Befüllvorrichtung (90) mit der Förderung von Betriebsflüssigkeit in den Betriebsflüssigkeitsbehälter (10) startet; und
- Übertragen eines zweiten Befüllstoppsignals von der Tanksteuereinrichtung (60) an die Befüllvorrichtung (90) über die Datenaustauschverbindung, wenn das Befüllstoppsignal an zumindest einen der Aktuatoren (20-25, 44) übertragen wird, woraufhin die Befüllvorrichtung (90) die Förderung der Betriebsflüssigkeit beendet.

15. Verfahren nach Anspruch 14, **dadurch gekennzeichnet, dass** ein weiteres Befüllstartsignal von der Tanksteuereinrichtung (60) an die Befüllvorrichtung (90) übertragen wird, nachdem das zweite Befüllstoppsignal von der Tanksteuereinrichtung (60) an die Befüllvorrichtung (90) übertragen wurde, so dass eine weitere Befüllung des Betriebsflüssigkeitsbehälters (10) durch die Befüllvorrichtung (90) erfolgt, bis ein automatisches Abschalten des Befüllvorganges durch die Befüllvorrichtung (90) durchgeführt wird.

16. Verfahren nach Anspruch 13 oder 14, **dadurch gekennzeichnet, dass** das Befüllstoppsignal an das Betriebs- und/oder Entlüftungsventil (21, 22) ausgegeben wird, wenn der Füllstand des Betriebsflüssigkeitsbehälters (10) den Sollfüllstand erreicht hat und ein Währungsbetrag der von der Befüllvorrichtung (90) geförderten Betriebsflüssigkeitsmenge einem glatten Währungsbetrag entspricht.

17. Verfahren nach Anspruch 13, **gekennzeichnet durch** die folgenden Merkmale:
- Etablieren einer Datenaustauschverbindung zwischen der Tanksteuereinrichtung (60) und der Befüllvorrichtung (90);
- Übertragen eines Befüllstartsignals von der Tanksteuereinrichtung (60) an die Befüllvorrichtung (90) über die Datenaustauschverbindung, wenn das Entlüftungssignal an das Betriebs- und/oder Betankungsentlüftungsventil (21, 22) übertragen wird, woraufhin die Befüllvorrichtung (90) mit der Förderung von Betriebsflüssigkeit in den Betriebsflüssigkeitsbehälter (10) startet; und
- Übertragen mittels der Tanksteuereinrichtung (60) eines Belüftungsstoppsignals an das Betriebs- und/oder Betankungsentlüftungsventil (21, 22), so dass eine Entlüftung des Betriebsflüssigkeitsbehälters (10) gestoppt wird, und gleichzeitiges Übertragen eines Signals von der Tanksteuereinrichtung (60) an die Befüllvorrichtung (90), mittels dem eine Reduzierung einer Förderrate der Befüllvorrichtung (90) initiiert wird.

## Claims

1. An operating fluid container (10) for a motor vehicle having the following features:
- the operating fluid container (10) comprises a fill level sensor (13), a tank control device (60) and an electrically and/or electromagnetically actuable actuator (20, 21, 22, 23, 24, 25, 44) by means of which the termination of a filling procedure of the operating fluid container (10) can be initiated;
- the tank control device (60) is connected to the actuator (20, 21, 22, 23, 24, 25, 44) by means of a first data exchange connection (101) and to the fill level sensor (13) by means of a second data exchange connection (102);
- the fill level sensor (13) is designed to transmit data representing a fill level of the operating fluid container (10) to the tank control device (60) via the second data exchange connection (102);
- the tank control device (60) is designed to transmit a filling stop signal to the actuator (20, 21, 22, 23, 24, 25, 44) via the first data exchange connection (101) upon receiving data which represent a predetermined fill level of the operating fluid container (10); and
- the actuator (20, 21, 22, 23, 24, 25, 44) initiates the termination of a filling procedure of the operating fluid container (10) upon receiving the filling stop signal.

2. The operating fluid container (10) as claimed in claim 1, **characterized by** the following features:
- the tank control device (60) is connected to a filling device (90, 91) by means of a third data exchange connection (103); and
- the tank control device (60) is designed to transmit the filling stop signal to the filling device (90, 91) via the third data exchange connection (103) upon receiving data which represent the predetermined fill level of the operating fluid container (10).

3. The operating fluid container (10) as claimed in one of the preceding claims, **characterized by** the following features:
- the tank control device (60) is designed to receive data representing an inclination of the operating fluid container (10) in addition to the data transmitted by the fill level sensor (13); and
- the tank control device (60) is designed to identify an actual fill level of the operating fluid container (10) by means of the data representing the fill level and the data representing the inclination of the operating fluid container (10).

4. The operating fluid container (10) as claimed in claim 3, **characterized by** the following features:
- the operating fluid container (10) comprises an inclination sensor (80) by means of which the inclination of the operating fluid container (10) can be determined; and
- the inclination sensor (80) is connected to the tank control device (60) via the second data exchange connection (102) and/or a fourth data exchange connection (104), via which data identified by the inclination sensor and representing the inclination of the operating fluid container (10) can be transmitted to the tank control device (60).

5. The operating fluid container (10) as claimed in one of the preceding claims, **characterized by** the following features:
- the at least one actuator (21, 22) is designed as a service and/or refueling vent valve (21, 22) which is arranged in and/or on the operating fluid container (10);
- the service and/or refueling vent valve (21, 22) is electrically and/or electromagnetically actuable between an open position and a closed position;
- in the open position of the service and/or refueling vent valve (21, 22), the operating fluid container (10) is fluidically connected to a vent line (30, 31) by means of the service and/or refueling vent valve (21, 22); and
- in the closed position of the service and/or refueling vent valve (21, 22), the operating fluid container (10) is fluidically separated from the vent line (30, 31) by means of the service and/or refueling vent valve (21, 22).

6. The operating fluid container (10) as claimed in one of the preceding claims, **characterized by** the following features:
- the at least one actuator (20) is designed as a non-return valve (20), which is arranged in and/or on a filler pipe (11) leading into the operating fluid container (10);
- the non-return valve (20) is electrically and/or electromagnetically actuable between an open position and a closed position;
- in the open position of the non-return valve (20), the operating fluid container (10) is fluidically connected to the filler pipe (11);
- in the closed position of the non-return valve (20), the operating fluid container (10) is fluidically separated from the filler pipe (10) by means of the non-return valve (20) or the clear width of the filler pipe (11) is reduced by means of the non-return valve (20).

7. The operating fluid container (10) as claimed in one of the preceding claims, **characterized by** the following features:
- the at least one actuator (25) is designed as an interfering body (25) which is arranged in a filler pipe (11) leading into the operating fluid container (10);
- the interfering body (25) is electrically and/or electromagnetically actuable between an open position and an interfering position;
- in the open position of the interfering body (25), a clear width of the filler pipe (25) is not reduced; and
- in the interfering position of the interfering body (25), this latter projects into the filler pipe (11) and reduces the clear width of the filler pipe (11).

8. The operating fluid container (10) as claimed in one of the preceding claims, **characterized by** the following features:
- the at least one actuator (23) is designed as a cutoff valve (23) which is arranged between the operating fluid container (10) and an active carbon filter (40);
- the cutoff valve (23) is electrically and/or electromagnetically actuable between an open position and a closed position;
- in the open position of the cutoff valve (23), the operating fluid container (10) is fluidically connected to the active carbon filter (40) by means of the cutoff valve (23); and
- in the closed position of the cutoff valve (23), the operating fluid container (10) is fluidically separated from the active carbon filter (40) by means of the cutoff valve (23).

9. The operating fluid container (10) as claimed in one of the preceding claims, **characterized by** the following features:
- the at least one actuator (23) is designed as a cutoff valve (23), which is arranged between an active carbon filter (40) and the atmosphere;
- the cutoff valve (23) is electrically and/or electromagnetically actuable between an open position and a closed position;
- in the open position of the cutoff valve (23), the operating fluid container (10) is fluidically connected to the atmosphere via the active carbon filter (40) and via the cutoff valve (23); and
- in the closed position of the cutoff valve (23), the operating fluid container (10) and the active carbon filter (40) are fluidically separated from the atmosphere by means of the cutoff valve (23).

10. The operating fluid container (10) as claimed in one of the preceding claims, **characterized by** the following features:
- the at least one actuator (24) is designed as an electromagnet (24), which is arranged in a filler neck (12) of a filler pipe (11) leading into the operating fluid container (10);
- the electromagnet (24) is actuable between an active state and a passive state;
- in the active state, the electromagnet (24) generates a magnetic field; and
- in the passive state, the electromagnet (24) does not generate a magnetic field.

11. The operating fluid container (10) as claimed in one of the preceding claims, **characterized by** the following features:
- the tank control device (60) has a specified fill level signal input line via which data representing a specified fill level can be transmitted to the tank control device (60); and
- the tank control device (60) is designed to issue the filling stop signal in such a way that the fill level of the operating fluid container (10) corresponds to the specified fill level after the termination of the filling procedure.

12. The operating fluid container (10) as claimed in claim 11, **characterized by** the following features:
- the tank control device (60 has a price signal input line, via which price information of operating fluid to be dispensed into the operating fluid container (10) can be transmitted; and
- the tank control device (60) is designed in such a way that, taking into account the price information and the specified fill level, it issues the filling stop signal in such a way that, after the termination of the filling procedure, a price of the operating fluid dispensed into the operating fluid container corresponds to a flat currency amount.

13. A method for filling an operating fluid container (10) by means of a filling device (90), wherein the operating fluid container (10) has the features of one of the preceding claims and a service and/or refueling vent valve (21, 22), and wherein the method has the following method steps:
- transmitting a venting signal to at least the service and/or refueling vent valve (21, 22) by means of the tank control device (60);
- identifying the fill level of the operating fluid container (10) by means of the fill level sensor (13); and
- issuing a filling stop signal to at least one actuator (20, 21, 22, 23, 24, 25, 44) when the fill level of the operating fluid container (10) has reached a specified fill level, wherein the specified fill level is lower than a maximum fill level of the operating fluid container (10).

14. The method as claimed in claim 13, **characterized by** the following features:
- establishing a data exchange connection between the tank control device (60) and the filling device (90);
- transmitting a filling start signal from the tank control device (60) to the filling device (90) via the data exchange connection when the venting signal is transmitted to the service and/or refueling vent valve (21, 22), whereupon the filling device (90) starts with the delivery of operating fluid into the operating fluid container (10); and
- transmitting a second filling stop signal from the tank control device (60) to the filling device (90) via the data exchange connection when the filling stop signal is transmitted to at least one of the actuators (20-25, 44), whereupon the filling device (90) terminates the delivery of the operating fluid.

15. The method as claimed in claim 14, **characterized in that** a further filling start signal is transmitted from the tank control device (60) to the filling device (90) after the second filling stop signal has been transmitted from the tank control device (60) to the filling device (90), so that a further filling of the operating fluid container (10) by the filling device (90) takes place until an automatic shut-off of the filling procedure is implemented by the filling device (90).

16. The method as claimed in claim 13 or 14, **characterized in that** the filling stop signal is issued to the service and/or vent valve (21, 22) when the fill level of the operating fluid container (10) has reached the specified fill level and a currency amount of the operating fluid quantity delivered by the filling device (90) corresponds to a flat currency amount.

17. The method as claimed in claim 13, **characterized by** the following features:
- establishing a data exchange connection between the tank control device (60) and the filling device (90);
- transmitting a filling start signal from the tank control device (60) to the filling device (90) via the data exchange connection when the venting signal is transmitted to the service and/or refueling vent valve (21, 22), whereupon the filling device (90) starts with the delivery of operating fluid into the operating fluid container (10); and
- transmitting a ventilation stop signal to the service and/or refueling vent valve (21, 22) by means of the tank control device (60) so that venting of the operating fluid container (10) is stopped, and simultaneously transmitting a signal from the tank control device (60) to the filling device (90) by means of which a reduction in a delivery rate of the filling device (90) is initiated.

## Revendications

1. Récipient de liquide de service (10) destiné à un véhicule automobile et présentant les caractéristiques suivantes :
- le récipient de liquide de service (10) comprend un capteur de niveau de remplissage (13), un dispositif de commande de réservoir (60) et un actionneur (20, 21, 22, 23, 24, 25, 44) à commande électrique et/ou électromagnétique, qui permet de déclencher la fin d'une opération de remplissage du récipient de liquide de travail (10) ;
- le dispositif de commande de réservoir (60) est relié à l'actionneur (20, 21, 22, 23, 24, 25, 44) au moyen d'une première liaison d'échange de données (101) et au capteur de niveau de remplissage (13) au moyen d'une seconde liaison d'échange de données (102) ;
- le capteur de niveau de remplissage (13) est conçu pour transmettre des données représentant un niveau de remplissage du récipient de liquide de service (10) au dispositif de commande de réservoir (60) par le biais de la deuxième liaison d'échange de données (102) ;
- le dispositif de commande de réservoir (60) est conçu pour transmettre un signal d'arrêt de remplissage à l'actionneur (20, 21, 22, 23, 24, 25, 44) par le biais de la première liaison d'échange de données (101) lors de la réception de données représentant un niveau de remplissage prédéterminé du récipient de liquide de service (10) ; et
- à la réception du signal d'arrêt de remplissage, l'actionneur (20, 21, 22, 23, 24, 25, 44) met fin à un processus de remplissage du récipient de liquide de service (10).

2. Récipient de liquide de travail (10) selon la revendication 1, **caractérisé par** les caractéristiques suivantes :
- le dispositif de commande de réservoir (60) est relié à un dispositif de remplissage (90, 91) au moyen d'une troisième liaison d'échange de données (103) ; et
- le dispositif de commande de réservoir (60) est conçu pour transmettre le signal d'arrêt de remplissage au dispositif de remplissage (90, 91) par le biais de la troisième liaison d'échange de données (103) lors de la réception de données représentant le niveau de remplissage prédéterminé du récipient de liquide de travail (10).

3. Récipient de liquide de service (10) selon l'une des revendications précédentes, **caractérisé par** les caractéristiques suivantes :
- le dispositif de commande de réservoir (60) est conçu pour recevoir, en plus des données transmises par le capteur de niveau de remplissage (13), d'autres données représentant une inclinaison du récipient de liquide de service (10) ; et
- le dispositif de commande de réservoir (60) est conçu pour déterminer un niveau de remplissage réel du récipient de liquide de service (10) au moyen des données représentant le niveau de remplissage et des données représentant l'inclinaison du récipient de liquide de service (10).

4. Récipient de liquide de service (10) selon la revendication 3, **caractérisé par** les caractéristiques suivantes :
- le récipient de liquide de travail (10) comprend un capteur d'inclinaison (80) permettant de déterminer l'inclinaison du récipient de liquide de service (10) ; et
- le capteur d'inclinaison (80) est relié au dispositif de commande de réservoir (60) par le biais de la deuxième liaison d'échange de données (102) et/ou d'une quatrième liaison d'échange de données (104) qui permettent de transmettre au dispositif de commande de réservoir (60) des données déterminées par le capteur d'inclinaison et représentant l'inclinaison du récipient de liquide de service (10).

5. Récipient de liquide de service (10) selon l'une des revendications précédentes, **caractérisé par** les caractéristiques suivantes :
- l'au moins un actionneur (21, 22) est conçu comme une soupape de ventilation de service et/ou de remplissage (21, 22) qui est disposée dans récipient de liquide de service (10) et/ou au niveau de celui-ci ;
- la soupape de ventilation de service et/ou de remplissage (21, 22) est actionnée par des moyens électriques et/ou électromagnétiques entre une position ouverte et une position fermée ;
- lorsque la soupape de ventilation de service et/ou de remplissage (21, 22) est en position ouverte, le récipient de liquide de service (10) est relié de manière fluidique à un conduit de ventilation (30, 31) au moyen de la soupape de ventilation de service et/ou de remplissage (21, 22) ; et
- lorsque la soupape de ventilation de service et/ou de remplissage (21, 22) est en position fermée, le récipient de liquide de service (10) est séparé fluidiquement du conduit de ventilation (30, 31) au moyen de la soupape de ventilation de service et/ou de remplissage (21, 22) .

6. Récipient de liquide de service (10) selon l'une des revendications précédentes, **caractérisé par** les caractéristiques suivantes :
- l'au moins un actionneur (20) est conçu comme une soupape anti-retour (20) qui est disposée dans un tuyau de remplissage (11), et/ou au niveau de celui-ci, qui débouche dans le récipient de liquide de service (10) ;
- la soupape anti-retour (20) est actionnée entre une position ouverte et une position fermée par des moyens électriques et/ou électromagnétiques ;
- lorsque la soupape anti-retour (20) est position ouverte, le récipient de liquide de service (10) est relié fluidiquement au tuyau de remplissage (11) ;
- lorsque la soupape anti-retour (20) est en position fermée, le récipient de liquide de service (10) est séparé fluidiquement du tuyau de remplissage (11) au moyen de la soupape anti-retour (20), ou le diamètre intérieur du tuyau de remplissage (11) est réduit au moyen de la soupape anti-retour (20).

7. Récipient de liquide de service (10) selon l'une des revendications précédentes, **caractérisé par** les caractéristiques suivantes :
- l'au moins un actionneur (25) est conçu comme un élément perturbateur (25) qui est disposé dans un tube de remplissage (11) qui débouche dans le récipient de liquide de service (10) ;
- l'élément perturbateur (25) peut être actionné entre une position ouverte et une position fermée par des moyens électriques et/ou électromagnétiques ;
- lorsque l'élément perturbateur (25) est en position ouverte, le diamètre intérieur du tuyau de remplissage (25) n'est pas réduit ; et
- lorsque l'élément perturbateur (25) est en position fermée, celui-ci fait saillie dans le tuyau de remplissage (11) et réduit le diamètre intérieur du tuyau de remplissage (11).

8. Récipient de liquide de service (10) selon l'une des revendications précédentes, **caractérisé par** les caractéristiques suivantes :
- l'au moins un actionneur (23) est conçu comme une soupape d'arrêt (23) qui est disposée entre le récipient de liquide de service (10) et un filtre à charbon actif (40) ;
- la soupape d'arrêt (23) peut être actionnée entre une position ouverte et une position fermée par des moyens électriques et/ou électromagnétiques ;
- lorsque la soupape d'arrêt (23) est en position ouverte, le récipient de liquide de service (10) est relié de manière fluidique au filtre à charbon actif (40) au moyen de la soupape d'arrêt (23) ; et
- lorsque la soupape d'arrêt (23) est en position fermée, le récipient de liquide de service (10) est séparé fluidiquement du filtre à charbon actif (40) au moyen de la soupape d'arrêt (23).

9. Récipient de liquide de service (10) selon l'une des revendications précédentes, **caractérisé par** les caractéristiques suivantes :
- l'au moins un actionneur (23) est conçu comme une soupape d'arrêt (23) qui est disposée entre un filtre à charbon actif (40) et l'atmosphère ;
- la soupape d'arrêt (23) peut être actionnée entre une position ouverte et une position fermée par des moyens électriques et/ou électromagnétiques ;
- lorsque la soupape d'arrêt (23) est en position ouverte, le récipient de liquide de service (10) est relié fluidiquement à l'atmosphère par le biais du filtre à charbon actif (40) et par le biais de la soupape d'arrêt (23) ; et
- lorsque la soupape d'arrêt (23) est en position fermée, le récipient de liquide de service (10) et le filtre à charbon actif (40) sont séparées fluidiquement de l'atmosphère au moyen de la soupape d'arrêt (23).

10. Récipient de liquide de service (10) selon l'une des revendications précédentes, **caractérisé par** les caractéristiques suivantes :
- l'au moins un actionneur (24) est conçu sous la forme d'un électroaimant (24) qui est disposé dans une tubulure de remplissage (12) d'un tuyau de remplissage (11) qui débouche dans le récipient de liquide de service (10) ;
- l'électroaimant (24) peut être actionné entre un état actif et un état passif ;
- à l'état actif, l'électroaimant (24) génère un champ magnétique ; et
- à l'état passif, l'électroaimant (24) ne génère aucun champ magnétique.

11. Récipient de liquide de service (10) selon l'une des revendications précédentes, **caractérisé par** les caractéristiques suivantes :
- le dispositif de commande de réservoir (60) comporte une ligne d'entrée de signal de niveau de remplissage souhaité qui permet de transmettre au dispositif de commande de réservoir (60) des données représentant un niveau de remplissage ; et
- le dispositif de commande de réservoir (60) est conçu pour délivrer le signal d'arrêt de remplissage de telle sorte que, une fois le processus de remplissage terminé, le niveau de remplissage du récipient de liquide de service (10) corresponde au niveau de remplissage souhaité.

12. Récipient de liquide de service (10) selon la revendication 11, **caractérisé par** les caractéristiques suivantes :
- le dispositif de commande de réservoir (60) comporte une ligne d'entrée de signal de prix qui permet de transmettre des informations de prix du liquide de service à remplir dans le récipient de liquide de service (10) ; et
- le dispositif de commande de réservoir (60) est conçu de manière à délivrer le signal d'arrêt de remplissage en tenant compte des informations de prix et du niveau de remplissage souhaité de manière à ce que, une fois le processus de remplissage terminé, un prix du liquide de service rempli dans le récipient de liquide de service corresponde à une valeur monétaire ronde.

13. Procédé de remplissage d'un récipient de liquide de service (10) au moyen d'un dispositif de remplissage (90), le récipient de liquide de service (10) présentant les caractéristiques de l'une des revendications précédentes et comportant une soupape de ventilation de service et/ou de remplissage (21, 22), et le procédé comprenant les étapes de procédé suivantes :
- transmettre un signal de ventilation au moins à la soupape de ventilation de service et/ou de remplissage (21, 22) au moyen du dispositif de commande de réservoir (60) ;
- déterminer le niveau de remplissage du récipient de liquide de service (10) au moyen du capteur de niveau de remplissage (13) ; et
- délivrer un signal d'arrêt de remplissage à au moins un actionneur (20, 21, 22, 23, 24, 25, 44) lorsque le niveau de remplissage du récipient de liquide de service (10) a atteint le niveau souhaité, le niveau souhaité étant inférieur à un niveau maximal du récipient de liquide de service (10).

14. Procédé selon la revendication 13, **caractérisé par** les caractéristiques suivantes :
- établir une liaison d'échange de données entre le dispositif de commande de réservoir (60) et le dispositif de remplissage (90) ;
- transmettre un signal de début de remplissage du dispositif de commande de réservoir (60) au dispositif de remplissage (90) par le biais de la liaison d'échange de données lorsque le signal de ventilation est envoyé à la soupape de ventilation de service et/ou de remplissage (21, 22), après quoi le dispositif de remplissage (90) démarre avec l'acheminement du liquide de service jusque dans le récipient de liquide de service (10) ; et
- transmettre un deuxième signal d'arrêt de remplissage du dispositif de commande de réservoir (60) au dispositif de remplissage (90) par le biais de la liaison d'échange de données lorsque le signal d'arrêt de remplissage est transmis à au moins un des actionneurs (20-25, 44), après quoi le dispositif de remplissage (90) met fin à l'acheminement du liquide de service.

15. Procédé selon la revendication 14, **caractérisé en ce qu'**un autre signal de début de remplissage est transmis du dispositif de commande de réservoir (60) au dispositif de remplissage (90) après que le deuxième signal d'arrêt de remplissage a été transmis du dispositif de commande de réservoir (60) au dispositif de remplissage (90) de sorte qu'un autre remplissage du récipient de liquide de service (10) soit effectué par le dispositif de remplissage (90) jusqu'à ce qu'un arrêt automatique du processus de remplissage soit effectué par le dispositif de remplissage (90).

16. Procédé selon la revendication 13 ou 14, **caractérisé en ce que** le signal d'arrêt de remplissage est délivré à la soupape de service et/ou de ventilation (21, 22) lorsque le niveau de remplissage du récipient de liquide de service (10) a atteint le niveau de remplissage souhaité et qu'une valeur monétaire de la quantité de liquide de service acheminée par le dispositif de remplissage (90) corresponde à une valeur monétaire ronde.

17. Procédé selon la revendication 13, **caractérisé par** les caractéristiques suivantes :
- établir une liaison d'échange de données entre le dispositif de commande de réservoir (60) et le dispositif de remplissage (90) ;
- transmettre un signal de début de remplissage du dispositif de commande de réservoir (60) au dispositif de remplissage (90) par le biais de la liaison d'échange de données lorsque le signal de ventilation est transmis à la soupape de ventilation de service et/ou de remplissage (21, 22), après quoi le dispositif de remplissage (90) démarre avec l'acheminement du liquide de service jusque dans le récipient de liquide de service (10) ; et
- transmettre un signal d'arrêt de ventilation à la soupape de ventilation de service et/ou de remplissage (21, 22) au moyen du dispositif de commande de récipient (60) de manière à arrêter la ventilation du récipient de liquide de service (10) et à transmettre simultanément du dispositif de commande de réservoir (60) au dispositif de remplissage (90) un signal permettant de déclencher une réduction du débit d'acheminement du dispositif de remplissage (90).
